(19) Europäisches Patentamt
European Patent Office
Office européen des brevets

(11) EP 4 773 295 A1

(12) **EUROPEAN PATENT APPLICATION**
published in accordance with Art. 153(4) EPC

(43) Date of publication:
**08.07.2026 Bulletin 2026/28**

(21) Application number: **24872550.9**

(22) Date of filing: **27.09.2024**

(51) International Patent Classification (IPC):
***H01M 10/0567*** *(2010.01)* ***H01M 4/36*** *(2006.01)*
***H01M 4/38*** *(2006.01)* ***H01M 4/48*** *(2010.01)*
***H01M 4/587*** *(2010.01)* ***H01M 10/052*** *(2010.01)*
***H01M 10/0568*** *(2010.01)* ***H01M 10/0569*** *(2010.01)*

(52) Cooperative Patent Classification (CPC):
**H01M 4/36; H01M 4/38; H01M 4/48; H01M 4/587; H01M 10/052; H01M 10/0567; H01M 10/0568; H01M 10/0569;** Y02E 60/10

(86) International application number:
**PCT/JP2024/034774**

(87) International publication number:
**WO 2025/070769 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 JP 2023165238**

(71) Applicant: **Central Glass Co., Ltd.**
**Yamaguchi 755-0001 (JP)**

(72) Inventors:
- **KAWAHARA, Kei**
**Tokyo 101-0054 (JP)**
- **IWASAKI, Susumu**
**Tokyo 101-0054 (JP)**
- **MORINAKA, Takayoshi**
**Tokyo 101-0054 (JP)**
- **TAKAHASHI, Mikihiro**
**Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

(54) **NONAQUEOUS ELECTROLYTE SOLUTION AND NONAQUEOUS ELECTROLYTE BATTERY USING SAME**

(57) A nonaqueous electrolyte solution capable of improving the cycle characteristic and the initial resistance of a nonaqueous electrolyte solution battery having a negative electrode containing Si and/or a Si metal oxide and graphite as negative electrode active materials in a well-balanced manner is provided. The nonaqueous electrolyte solution contains (I) at least one selected from the group consisting of a compound represented by the following general formula (1), a compound represented by the following general formula (2), a compound represented by the following general formula (3), and a compound represented by the following general formula (4), (II) a solute, and (III) a nonaqueous organic solvent.

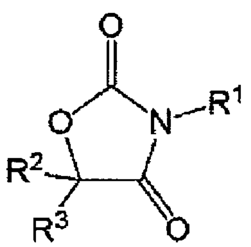
(1)

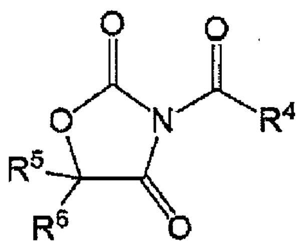
(2)

EP 4 773 295 A1

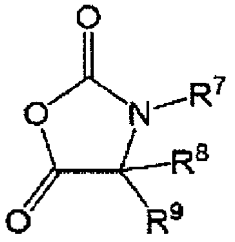 (3)

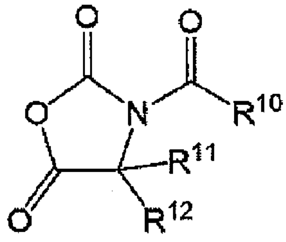 (4)

## Description

TECHNICAL FIELD

The present disclosure relates to a nonaqueous electrolyte solution containing a specific oxazolidine compound and a nonaqueous electrolyte solution battery containing the same.

BACKGROUND ART

Recently, electrical storage systems for applications for information-related devices or telecommunication devices, namely devices having a small size and requiring a high energy density, such as personal computers, video cameras, digital still cameras, and cellular phones, as well as electrical storage systems for applications for devices having a large size and requiring power, such as electric vehicles, hybrid vehicles, auxiliary power supplies for fuel cell vehicles, and electricity storages, have been attracting attentions. As one candidate therefor, nonaqueous electrolyte solution batteries, such as lithium ion batteries, lithium batteries, lithium ion capacitors, and sodium ion batteries, have actively been developed.

For nonaqueous electrolyte solution batteries, as battery characteristics, for example, it is required to achieve various characteristics such as cycle characteristic, input/output characteristic, storage characteristic, continuous charge characteristic, and safety at a high level. Moreover, in recent years, in in-vehicle batteries, there has been a growing demand for higher capacity for increasing the cruising range.

Many of these nonaqueous electrolyte solution batteries have already been put into practical use, but further improvement is desired in increasing the capacity. In particular, when an alloy-based active material, particularly an active material containing Si atoms, is used as the negative electrode active material, it is expected that the capacity of the battery is increased, but it is known that deterioration of the battery performance is large with long-term use. Therefore, attempts have been made to improve the capacity and the durability for increasing the cruising range, for example, for automobiles.

As measures for improving the high-temperature characteristic of a nonaqueous electrolyte solution battery and the battery characteristics (cycle characteristic) thereof after repeating charging and discharging, optimization of various constituting elements of the battery including active materials of a positive electrode and a negative electrode has been hitherto studied. Techniques relating to a nonaqueous electrolyte solution have also been studied, and use of a variety of additives to prevent deterioration of an electrolyte solution at surfaces of active positive and negative electrodes due to decomposition of the electrolyte solution has been proposed.

PTL 1 reports an electrolyte solution for a nonaqueous electrolyte solution secondary battery containing a nitrogen-containing heterocyclic compound such as a pyrrolidine compound, an imidazolidine compound, and an oxazolidine compound as a nonaqueous electrolyte solution having excellent battery characteristics, for example, high charge-discharge efficiency and capacity retention rate.

In addition, in PTL 2, a nonaqueous electrolyte solution containing an oxazolidine compound or the like in a solvent containing a 5- to 7-membered ring lactone compound has been reported.

Further, in PTL 3, it is reported that when a nitrogen-containing annular compound containing an ester bond is contained in a nonaqueous electrolyte solution, the capacity retention rate at 20°C and 60°C is improved, and the battery can exhibit flame retardancy.

Recently, nonaqueous electrolyte solution batteries using a negative electrode containing Si or a Si metal oxide as a negative electrode active material have been attracting attentions for increasing the capacity. However, when a negative electrode containing Si or a Si metal oxide is used, various problems different from those of the negative electrodes using only graphite of the related art newly arise. For example, it is known that, since the volume expansion and contraction associated with the charge and discharge reaction are very large, there are problems, such as pulverization of the particles in each charge and discharge cycle of the battery, irreversible increase in the capacity due to reaction of the Si exposed on the surface with the nonaqueous electrolyte solution solvent, and an increase in the resistance, and it is required to solve these problems.

In PTL 4, attempts have been made to produce a battery using a material containing Si and O as constituent elements and a graphite material as negative electrode active materials in a negative electrode and using a halogenated cyclic carbonate or vinylene carbonate in an electrolyte solution to improve the cycle characteristic of the battery.

In addition, in NPL 1, a battery using a material containing Si and O as constituent elements and a graphite material as negative electrode active materials in a negative electrode and using an oxazolidine compound in an electrolyte solution is produced, and the cycle characteristic, the film formation characteristic, and the like of the battery are examined.

CITATION LIST

PATENT LITERATURE

Patent Literature 1: JP5109213B
Patent Literature 2: JP4302366B
Patent Literature 3: JP5439345B
Patent Literature 4: JP2011-233245A

NON-PATENT LITERATURE

Non Patent Literature 1: Cell Reports Physical Science 2, 100327 (2021)

SUMMARY OF INVENTION

TECHNICAL PROBLEM

However, it has been found by examination by the present inventors that, in a battery using a material containing Si and O as constituent elements and a graphite material as negative electrode active materials as disclosed in PTL 4 or NPL 1, the battery characteristics cannot always be improved sufficiently even when a nonaqueous electrolyte solution containing a compound such as those disclosed in PTLs 1 to 3 is applied, and in particular, there is room for improvement from the viewpoint of simultaneously improving the cycle characteristic and the initial resistance and improving the balance between the cycle characteristic and the initial resistance.

Accordingly, the present disclosure has been made in view of the above circumstances, and an object of the present disclosure is to provide a nonaqueous electrolyte solution capable of improving the cycle characteristic and the initial resistance in a well-balanced manner in a nonaqueous electrolyte solution battery containing Si and/or a Si metal oxide and graphite as negative electrode active materials and to provide a nonaqueous electrolyte solution battery including the same.

SOLUTION TO PROBLEM

As a result of intensive studies in order to solve the above problems, the present inventors have found that the cycle characteristic and the initial resistance of a battery can be improved in a well-balanced manner using a nonaqueous electrolyte solution containing the following components,

(I) at least one selected from the group consisting of a compound represented by the following general formula (1), a compound represented by the following general formula (2), a compound represented by the following general formula (3), and a compound represented by the following general formula (4),
(II) a solute, and
(III) a nonaqueous organic solvent, as a nonaqueous electrolyte solution used in a nonaqueous electrolyte solution battery having a negative electrode containing Si and/or a Si metal oxide and graphite as negative electrode active materials,

and the present invention has been thus completed. (Hereinafter, (I), (II), and (III) above are sometimes referred to as "the component (I)", "the component (II)", and "the component (III)", respectively.)

[Chem. 1]

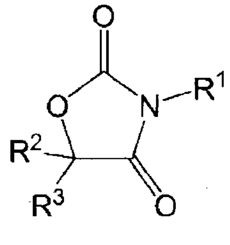

(1)

[In the general formula (1),
$R^1$ represents a hydrogen atom, a halogen atom, a hydrocarbon group selected from the group consisting of an alkyl

group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have an ether group between any carbon-carbon atoms thereof), or $(M_A{}^{a+})_b$ ($M_A{}^{a+}$ represents a cation selected from the group consisting of a proton, a metal cation, and an onium cation, a represents the valence of the cation, and b represents a number satisfying a $\times$ b = 1). Here, when $R^1$ is $M_a{}^{a+})_b$, the site other than $R^1$ is a counter anion.

$R^2$ and $R^3$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, and the hydrocarbon group may have a heteroatom, a carbonyl group, an ester group, or an ether group between any carbon-carbon atoms thereof), and $R^2$ and $R^3$ may together form a carbonyl group.]

[Chem. 2]

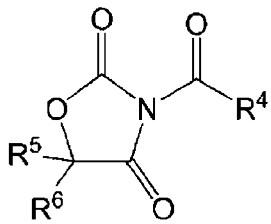

(2)

[In the general formula (2),

$R^4$ represents a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof).

$R^5$ and $R^6$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, an alkoxycarbonyl group having 1 to 5 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, or the hydrocarbon group may have a heteroatom, a carbonyl group, an ester group, or an ether group between any carbon-carbon atoms), and $R^5$ and $R^6$ may together form a carbonyl group.]

[Chem. 3]

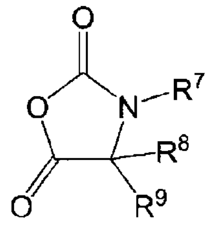

(3)

[In the general formula (3),

$R^7$ represents a hydrogen atom, a halogen atom, a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have an ether group between any carbon-carbon atoms thereof), or $(M_C^{e+})_f$ ($M_C^{e+}$ represents a cation selected from the group consisting of a proton, a metal cation, and an onium cation, e represents the valence of the cation, and f represents a number satisfying $e \times f = 1$). Here, when $R^7$ is $(M_C^{e+})_f$, the site other than $R^7$ is a counter anion.

$R^8$ and $R^9$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, and the hydrocarbon group may have a heteroatom, a carbonyl group, an ester group, or an ether group between any carbon-carbon atoms thereof), and $R^8$ and $R^9$ may together form a carbonyl group.]

[Chem. 4]

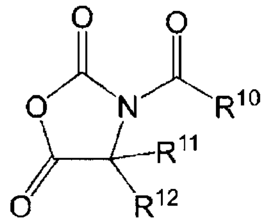

(4)

[In the general formula (4),

$R^{10}$ represents a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof).

$R^{11}$ and $R^{12}$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, an alkoxycarbonyl group having 1 to 5 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon

atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof), and $R^{11}$ and $R^{12}$ may together form a carbonyl group.]

Preferable aspects of the present disclosure are, for example, as follows.

1. A nonaqueous electrolyte solution for use in a nonaqueous electrolyte solution battery having a positive electrode and a negative electrode containing Si and/or a Si metal oxide and graphite as negative electrode active materials,

containing the following components;

(I) at least one selected from the group consisting of a compound represented by the following general formula (1), a compound represented by the following general formula (2), a compound represented by the following general formula (3), and a compound represented by the following general formula (4);
(II) a solute; and
(III) a nonaqueous organic solvent.

[Chem. 5]

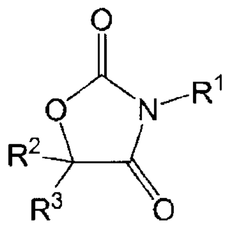

(1)

[In the general formula (1),
$R^1$ represents a hydrogen atom, a halogen atom, a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have an ether group between any carbon-carbon atoms thereof), or $(M_A^{a+})_b$ ($M_A^{a+}$ represents a cation selected from the group consisting of a proton, a metal cation, and an onium cation, a represents the valence of the cation, and b represents a number satisfying $a \times b = 1$). Here, when $R^1$ is $(M_A^{a+})_b$, the site other than $R^1$ is a counter anion.
$R^2$ and $R^3$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, and the hydrocarbon group may have a heteroatom, a carbonyl group, an ester group, or an ether group between any carbon-carbon atoms thereof), and $R^2$ and $R^3$ may together form a carbonyl group.]

[Chem. 6]

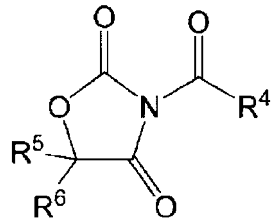

(2)

[In the general formula (2),

$R^4$ represents a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof).

$R^5$ and $R^6$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, an alkoxycarbonyl group having 1 to 5 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, or the hydrocarbon group may have a heteroatom, a carbonyl group, an ester group, or an ether group between any carbon-carbon atoms), and $R^5$ and $R^6$ may together form a carbonyl group.]

[Chem. 7]

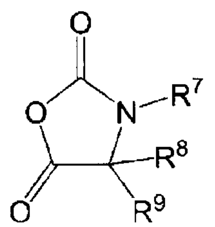

(3)

[In the general formula (3),

$R^7$ represents a hydrogen atom, a halogen atom, a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have an ether group between any carbon-carbon atoms thereof), or $(M_C^{e+})_f$ ($M_C^{e+}$ represents a cation selected from the group consisting of a proton, a metal cation, and an onium cation, e represents the valence of the cation, and f represents a number satisfying $e \times f = 1$). Here, when $R^7$ is $(M_C^{e+})_f$, the site other than $R^7$ is a counter anion.

$R^8$ and $R^9$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an

aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, and the hydrocarbon group may have a heteroatom, a carbonyl group, an ester group, or an ether group between any carbon-carbon atoms thereof), and $R^8$ and $R^9$ may together form a carbonyl group.]

[Chem. 8]

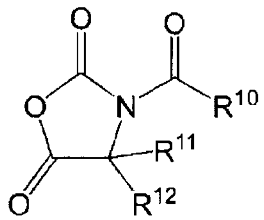

(4)

[In the general formula (4),

$R^{10}$ represents a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof).

$R^{11}$ and $R^{12}$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, an alkoxycarbonyl group having 1 to 5 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof), and $R^{11}$ and $R^{12}$ may together form a carbonyl group.]

2. The nonaqueous electrolyte solution according to 1 above in which the concentration of the (I) is 0.01 to 11% by mass with respect to the total amount of the nonaqueous electrolyte solution.
3. The nonaqueous electrolyte solution according to 2 above in which the concentration of the (I) is 0.08 to 10.5% by mass with respect to the total amount of the nonaqueous electrolyte solution.
4. The nonaqueous electrolyte solution according to 3 above in which the concentration of the (I) is 0.20 to 9% by mass with respect to the total amount of the nonaqueous electrolyte solution.
5. The nonaqueous electrolyte solution according to any one of claims 1 to 4 in which the (I) is at least one selected from the group consisting of the compound represented by the general formula (1) and the compound represented by the general formula (2).
6. The nonaqueous electrolyte solution according to any one of 1 to 5 above in which the (II) is at least one selected from the group consisting of $LiPF_6$, $LiBF_4$, $LiSbF_6$, $LiAsF_6$, $LiClO_4$, $LiN(SO_2F)_2$ (hereinafter sometimes referred to as "FSI"), $LiAlO_2$, $LiAlCl_4$, LiCl, and LiI.
7. The nonaqueous electrolyte solution according to any one of 1 to 6 above in which the (III) contains at least one selected from the group consisting of a cyclic ester, a chain ester, a cyclic ether, a chain ether, a sulfone compound, a sulfoxide compound, and an ionic liquid.
8. The nonaqueous electrolyte solution according to 7 above in which the cyclic ester contains a cyclic carbonate.
9. The nonaqueous electrolyte solution according to 8 above in which the cyclic carbonate contains at least one selected from the group consisting of ethylene carbonate and propylene carbonate.
10. The nonaqueous electrolyte solution according to 7 above in which the chain ester contains a chain carbonate.
11. The nonaqueous electrolyte solution according to 10 above in which the chain carbonate contains at least one

selected from the group consisting of ethyl methyl carbonate, dimethyl carbonate, diethyl carbonate, and methyl propyl carbonate.

12. The nonaqueous electrolyte solution according to any one of 1 to 11 above in which the nonaqueous electrolyte solution further contains at least one selected from the group consisting of cyclohexylbenzene, cyclohexylfluorobenzene, biphenyl, 2-fluorobiphenyl, t-butylbenzene, t-amylbenzene, 2-fluorotoluene, fluorobenzene, vinylene carbonate (hereinafter sometimes referred to as "VC"), an oligomer of vinylene carbonate (having a number average molecular weight in terms of polystyrene of 170 to 5000), vinylethylene carbonate, difluoroanisole, fluoroethylene carbonate (hereinafter sometimes referred to as "FEC"), 1,6-diisocyanatohexane, ethynylethylene carbonate, trans-difluoroethylene carbonate, methyl propargyl carbonate, ethyl propargyl carbonate, dipropargyl carbonate, maleic anhydride, succinic anhydride, 1,3-propanesultone, 1,3-propenesultone, 1,4-butanesultone, dimethylvinylene carbonate, 1,3,2-dioxathiolane-2,2-dioxide (hereinafter sometimes referred to as "DTD"), 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, tris(trimethylsilyl)borate, succinonitrile, (ethoxy)pentafluorocyclotriphosphazene, tetrafluoro(picolinato)phosphate, difluoro(picolinato)borate, 1,3-dimethyl-1,3-divinyl-1,3-di(1,1,1,3,3,3-hexafluoroisopropyl)disiloxane, lithium difluorophosphate (hereinafter sometimes referred to as "DFP"), sodium difluorophosphate, lithium fluorosulfate (hereinafter sometimes referred to as "FS"), sodium fluorosulfate, lithium trifluoromethanesulfonate, sodium trifluoromethanesulfonate, lithium nonafluorobutanesulfonate, sodium nonafluorobutanesulfonate, lithium difluorobis(oxalato)phosphate (hereinafter sometimes referred to as "DFBOP"), sodium difluorobis(oxalato)phosphate, lithium difluorooxalatoborate (hereinafter sometimes referred to as "DFOB"), sodium difluorooxalatoborate, lithium bis(oxalato)borate (hereinafter sometimes referred to as "BOB"), sodium bis(oxalato)borate, lithium tetrafluorooxalatophosphate (hereinafter sometimes referred to as "TFOP"), sodium tetrafluorooxalatophosphate, lithium tris(oxalato)phosphate, sodium tris(oxalato)phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide (hereinafter sometimes referred to as "DFPFSI"), sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl)imide, lithium tris(trifluoromethanesulfonyl)methide, sodium tris(trifluoromethanesulfonyl)methide, lithium acrylate, sodium acrylate, lithium methacrylate, sodium methacrylate, lithium methyl sulfate, sodium methyl sulfate, lithium ethyl sulfate, sodium ethyl sulfate, lithium nitrate, lithium nitrite, sodium nitrate, and sodium nitrite.

13. The nonaqueous electrolyte solution according to any one of 1 to 12 above further containing a compound represented by the following general formula (5).

[Chem. 9]

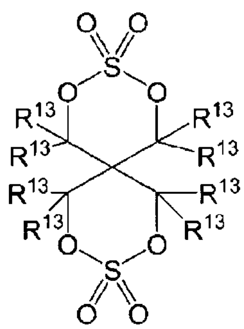

(5)

[In the general formula (5), $R^{13}$'s each independently represent a hydrogen atom, a halogen atom, or an alkyl group having 1 to 12 carbon atoms, and an oxygen atom may be inserted between any carbon atom-carbon atom bond in the alkyl group. Any hydrogen atom of the alkyl group may be substituted with a fluorine atom.]

14. The nonaqueous electrolyte solution according to 13 above in which the compound represented by the general formula (5) is at least one selected from the group consisting of the following compounds 1-1 (hereinafter sometimes referred to as "TDUTO") and 1-2.

[Chem. 10]

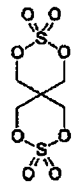
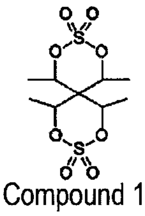

Compound 1-1 Compound 1-2

15. The nonaqueous electrolyte solution according to any one of 1 to 14 above further containing a compound represented by the following general formula (6).

[Chem. 11]

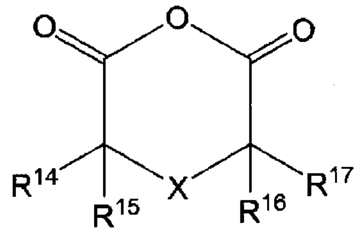

(6)

[In the general formula (6), $R^{14}$ to $R^{17}$ each independently represents a hydrogen atom, a halogen atom, an alkyl group, an alkenyl group, or an aryl group. X represents an oxygen atom, a sulfur atom, or an $SO_2$ group.]

16. The nonaqueous electrolyte solution according to 15 above in which the compound of the formula (6) is a compound represented by the following formula.

[Chem. 12]

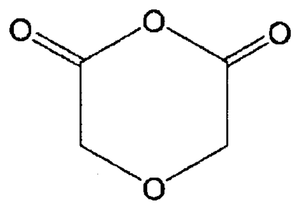

17. The nonaqueous electrolyte solution according to 1 above in which the total content of the Si and/or the Si metal oxide with respect to the total amount of the Si and/or the Si metal oxide and the graphite is 0.1 to 50% by mass.

18. A nonaqueous electrolyte solution battery having a positive electrode, a negative electrode containing Si and/or a Si metal oxide and graphite as negative electrode active materials, and the nonaqueous electrolyte solution according to any one of 1 to 17 above.

ADVANTAGEOUS EFFECTS OF INVENTION

According to the present disclosure, a nonaqueous electrolyte solution capable of improving the cycle characteristic and the initial resistance in a well-balanced manner in a nonaqueous electrolyte solution battery containing Si and/or a Si metal oxide and graphite as negative electrode active materials and a nonaqueous electrolyte solution battery including the same can be provided.

DESCRIPTION OF EMBODIMENTS

Hereinafter, the configuration of the nonaqueous electrolyte solution according to the present disclosure will be explained in detail.

Component (I)

The additives used in the nonaqueous electrolyte solution in the present disclosure are the four types of compounds explained above.

Here, the meanings of the functional groups described in each formula are as follows.

The halogen atom is selected from, for example, halogen atoms such as a fluorine atom, a chlorine atom, and a bromine atom. The halogen atom is preferably a fluorine atom.

The alkyl group having 1 to 10 carbon atoms may be linear or branched-chain, preferably has 1 to 10 carbon atoms and preferably has 1 to 5 carbon atoms. Examples of such an alkyl group include a methyl group, an ethyl group, an n-propyl group, an isopropyl group, an n-butyl group, a sec-butyl group, a tert-butyl group, an n-pentyl group, an n-hexyl group, an n-octyl group, and an n-decyl group.

Examples of the alkoxy group having 1 to 10 carbon atoms include alkoxy groups corresponding to the alkyl groups.

Examples of the alkenyl group having 2 to 10 carbon atoms include a linear or branched-chain alkenyl group, and an alkenyl group having 2 to 5 carbon atoms is preferable. Moreover, the alkenyl group may have two or more unsaturated bonds. Suitable examples of such an alkenyl group include a vinyl group, a 1-propenyl group, a 2-propenyl group, a 1-methylvinyl group, a 1-butenyl group, a 2-butenyl group, a 3-butenyl group, a 1-methylpropenyl group, a 1-pentenyl group, and a 1,3-butadienyl group.

Examples of the alkenyloxy group having 2 to 10 carbon atoms include alkenyloxy groups corresponding to the alkenyl groups.

Examples of the alkynyl group having 2 to 10 carbon atoms include a linear or branched-chain alkynyl group, and an alkynyl group having 2 to 5 carbon atoms is preferable. Moreover, the alkynyl group may have two or more unsaturated bonds. Suitable examples of such an alkynyl group include an ethynyl group, a 1-propynyl group, a 2-propynyl group, a 1-methylethynyl group, a 1-butynyl group, a 2-butynyl group, a 3-butynyl group, a 1-methylpropynyl group, a 1,1-dimethyl-2-propynyl group, and a 1-pentynyl group.

Examples of the alkynyloxy group having 2 to 10 carbon atoms include alkynyloxy groups corresponding to the alkynyl groups.

The cycloalkyl group having 3 to 8 carbon atoms is preferably a cycloalkyl group having 3 to 5 carbon atoms, and examples of such a cycloalkyl group include a cyclopropyl group, a cyclobutyl group, a cyclopentyl group, and a cyclohexyl group. Moreover, the cycloalkyl group also includes those having a linking group such as a methylene group, and suitable examples thereof include a cyclohexylmethyl group.

Suitable examples of the cycloalkoxy group having 3 to 8 carbon atoms include cycloalkoxy groups corresponding to the cycloalkyl groups.

Suitable examples of the aryl group having 6 to 10 carbon atoms include a phenyl group and a naphthalene group. Moreover, the aryl group also includes those having a linking group such as a methylene group, and suitable examples thereof include a benzyl group.

Suitable examples of the aryloxy group having 6 to 10 carbon atoms include a phenoxy group and a naphthoxy group.

The heteroaryl group having 6 to 10 carbon atoms is an aryl group containing a heteroatom such as an oxygen atom, a sulfur atom, and a nitrogen atom, and suitable examples of such a heteroaryl group include a furyl group, a thiophenyl group, a pyrrole group, an imidazole group, a pyrazole group, an oxazole group, a thiooxazole group, a pyridyl group, a pyridazine group, a pyrimidine group, a pyrazine group, a triazine group, an indole group, a purine group, and a quinolyl group. Suitable examples of the heteroaryloxy group having 6 to 10 carbon atoms include heteroaryloxy groups corresponding to the heteroaryl groups.

A hydrogen atom of the hydrocarbon group may be optionally substituted with a halogen atom, a cyano group, or an isocyano group. Moreover, the hydrocarbon group may have an ether group between any carbon-carbon atoms or may have a heteroatom, a carbonyl group, an ester group, or an ether group.

$M_A^{a+}$ in $(M_A^{a+})_b$ is a cation selected from a proton (hydrogen cation), a metal cation, and an onium cation. Suitable examples of the metal cation include cations of alkali metals, alkaline earth metals, and the like. Suitable examples of the alkali metal cation include a lithium cation and a sodium cation. Examples of the alkaline earth metal cation include a magnesium ion and a calcium ion. Examples of the onium cation include a trialkylammonium ion and tetra. Examples thereof include an alkylammonium ion, an ammonium ion having a spiro skeleton, a tetraalkylphosphonium ion, an imidazolium ion, and a nitronium cation, and of these, suitable examples include a trialkylammonium ion, a tetraalkylammonium ion, and a tetraalkylphosphonium ion. Here, when $R^1$ is $(M_A^{a+})_b$, the site other than $R^1$ is a counter anion.

The compounds of the general formulae (1) to (4) can all be easily produced or prepared by those skilled in the art by a known preparation method. Specifically, for example, the compound of the general formula (1) can be prepared referring to a document such as https://doi.org/10.1016/S0040-4020(98)01025-4, the compound of the general formula (2) can be prepared referring to a document such as Journal of Pharmacy Research Vol.4.Issue 10. October 2011, the

compound of the general formula (3) can be prepared referring to a document such as https://doi.org/10.1039/JR9500003213, and the compound of the general formula (4) can be prepared referring to a document such as https://doi.org/10.1039/D2OB00167E.

Examples of the typical compounds of the compound represented by the general formula (1) include the following compounds. In the compound represented by the general formula (1), when $R^1$ is an alkyl group, an alkenyl group, or an aryl group, it is preferable that $R^2$ and $R^3$ are not a hydrogen atom at the same time from the viewpoint of the initial resistance. Moreover, of the compounds represented by the general formula (1), the following compounds of 29, 45 and 48 are preferable in terms of the initial resistance and the cycle characteristic, and the compounds of 45 and 48 are particularly preferable.

[Chem. 13]

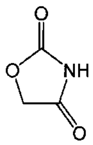
**1**

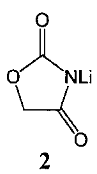
**2**

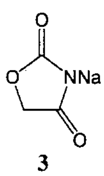
**3**

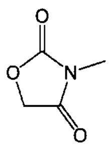
**4**

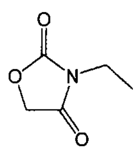
**5**

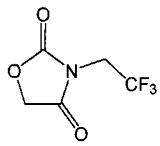
**6**

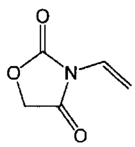
**7**

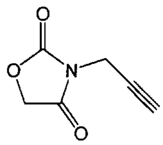
**8**

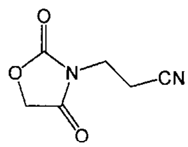
**9**

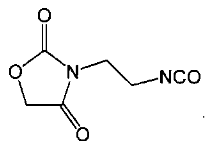
**10**

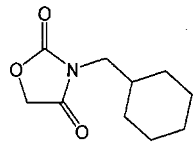
**11**

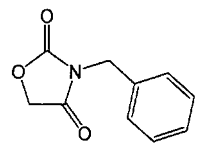
**12**

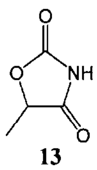
**13**

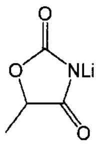
**14**

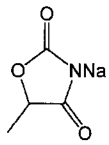
**15**

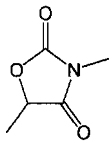
**16**

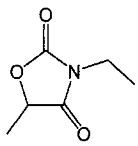
**17**

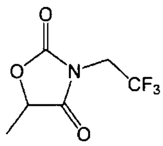
**18**

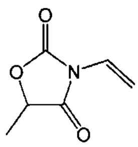
**19**

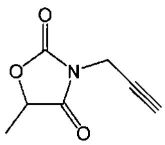
**20**

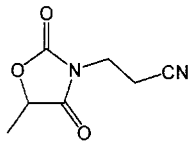
**21**

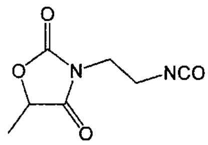
**22**

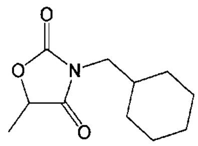
**23**

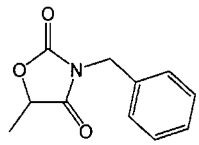
**24**

[Chem. 14]

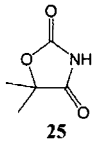
25
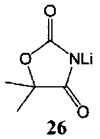
26
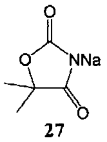
27
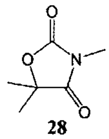
28
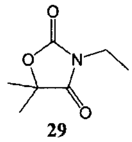
29
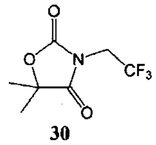
30

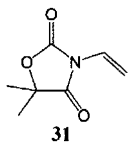
31
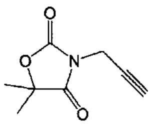
32
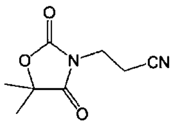
33
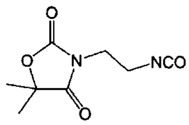
34
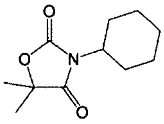
35
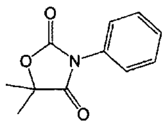
36

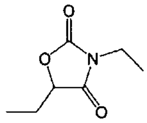
37
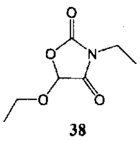
38
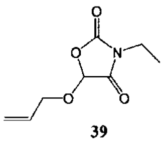
39
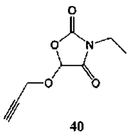
40
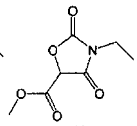
41
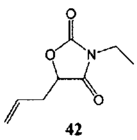
42

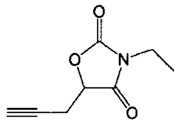
43
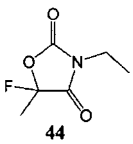
44
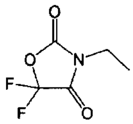
45
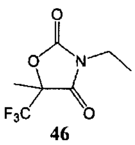
46
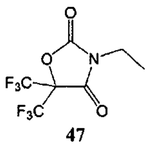
47
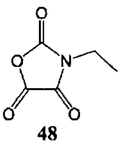
48

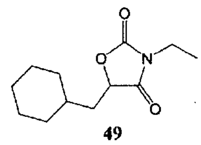
49
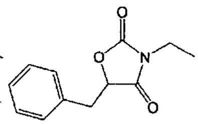
50

Examples of the typical compounds of the compound represented by the general formula (2) include the following compounds. Of the compounds represented by the general formula (2), the following compound of 71 is particularly preferable in terms of the initial resistance and the cycle characteristic.

[Chem. 15]

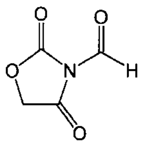
51
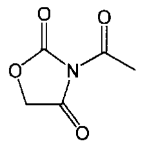
52
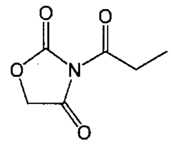
53
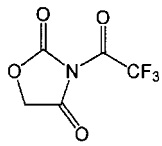
54
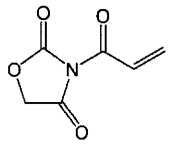
55
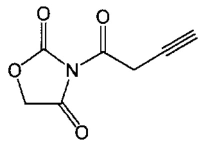
56

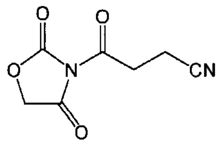
57
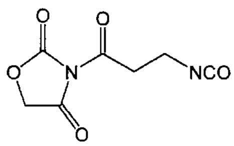
58
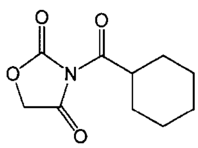
59
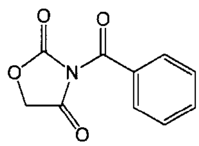
60

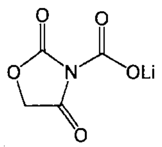
61
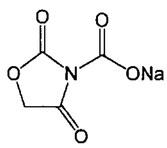
62
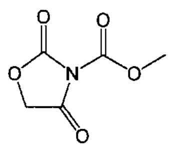
63
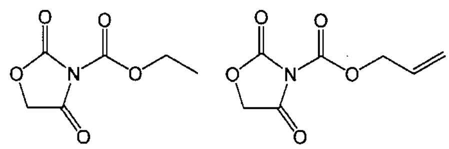
64
65

[Chem. 16]

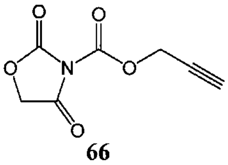
66
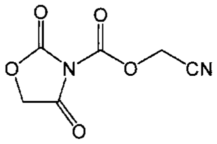
67
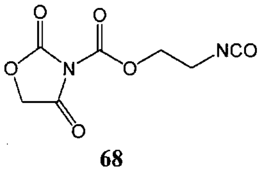
68
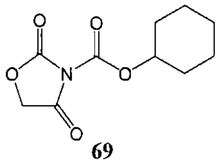
69
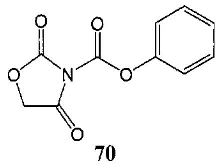
70
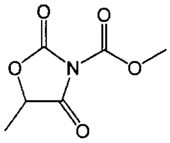
71
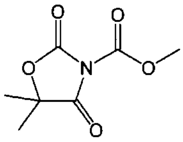
72
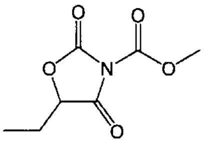
73
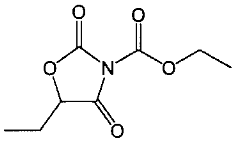
74
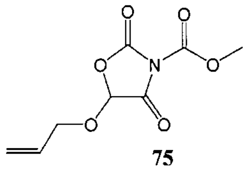
75
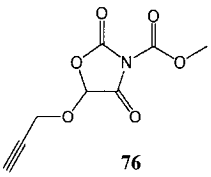
76
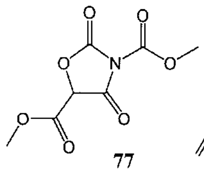
77
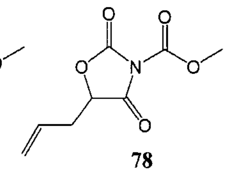
78
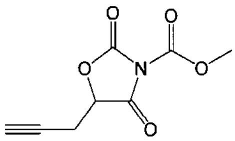
79
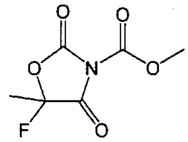
80
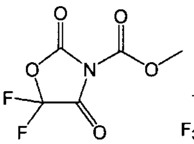
81
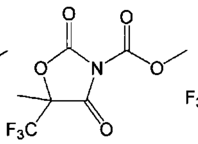
82
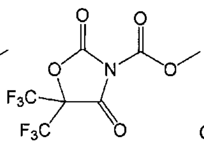
83
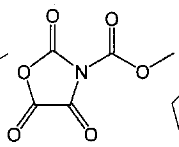
84
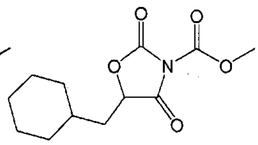
85
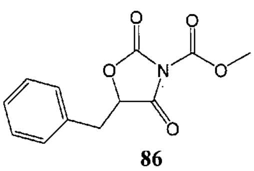
86
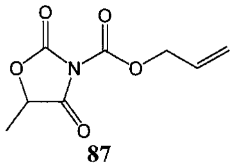
87
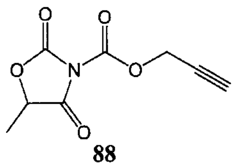
88

Examples of the typical compounds of the compound represented by the general formula (3) include the following compounds. Here, in a typical compound of the compound represented by the general formula (3), when $R^7$ is an alkyl group, an alkenyl group, or an aryl group, it is preferable that $R^8$ and $R^9$ are not a hydrogen atom at the same time in terms of the initial resistance. Furthermore, $R^7$ is preferably an alkyl group having 3 or less carbon atoms in terms of the initial resistance and the cycle characteristic.

[Chem. 17]

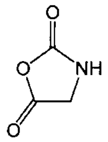
89

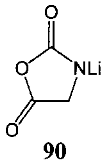
90

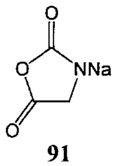
91

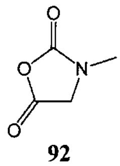
92

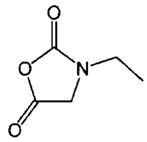
93

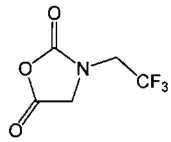
94

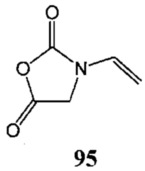
95

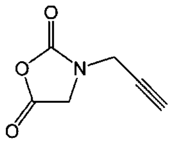
96

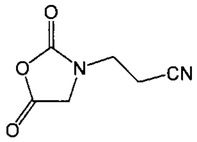
97

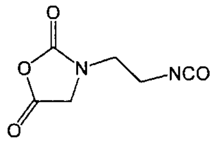
98

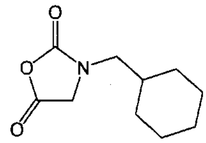
99

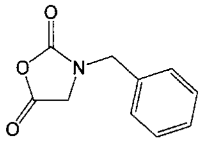
100

[Chem. 18]

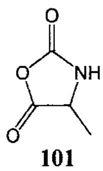
101

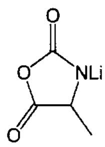
102

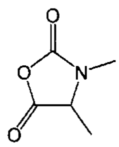
103

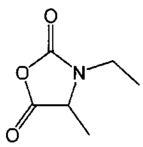
104

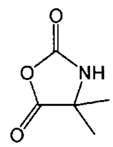
105

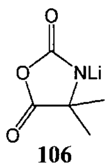
106

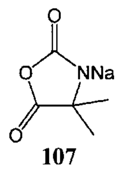
107

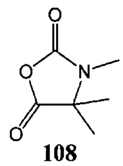
108

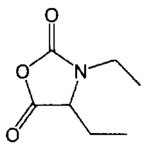
109

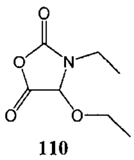
110

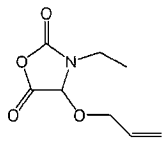
111

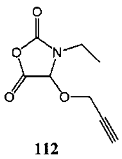
112

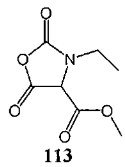
113

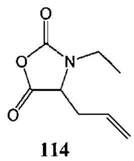
114

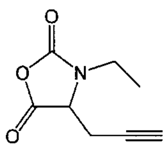
115

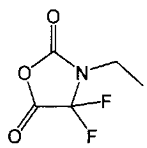
116

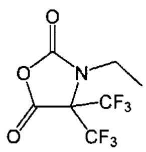
117

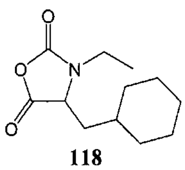
118

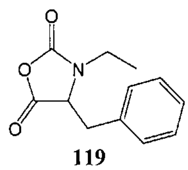
119

Examples of the typical compounds of the compound represented by the general formula (4) include the following compounds.

[Chem. 19]

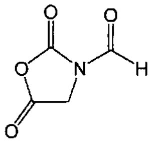
120
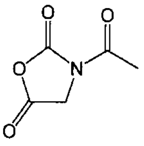
121
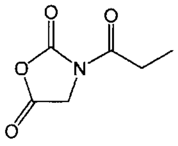
122
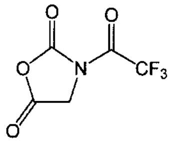
123
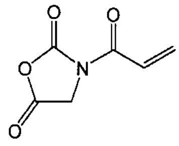
124
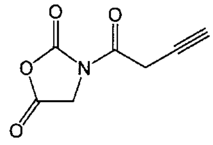
125

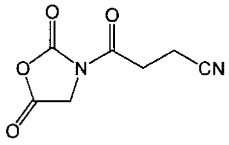
126
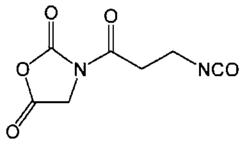
127
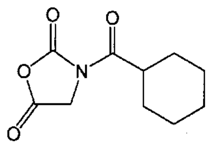
128
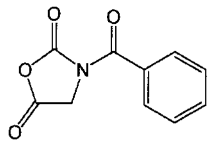
129

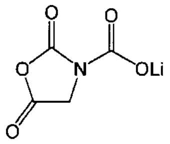
130
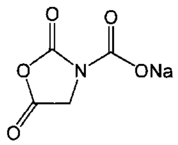
131
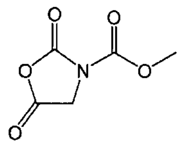
132
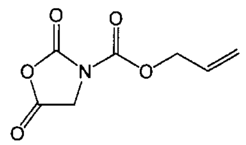
133
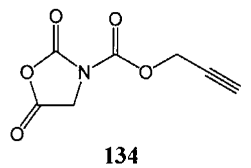
134

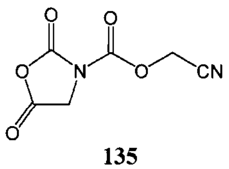
135
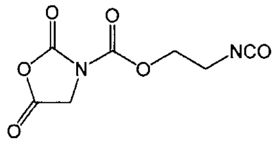
136
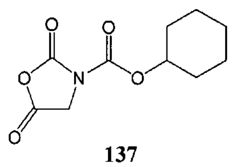
137
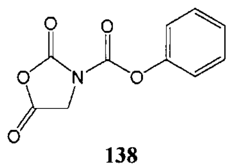
138

[Chem. 20]

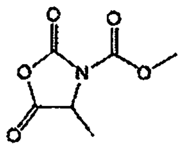
139
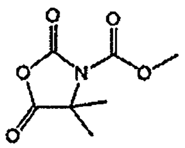
140
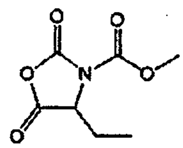
141
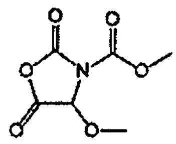
142
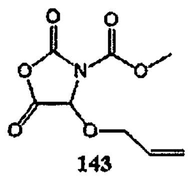
143

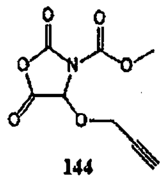
144
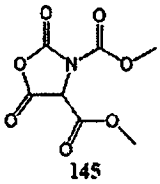
145
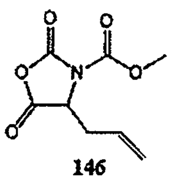
146
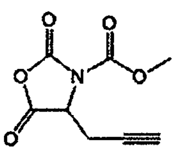
147

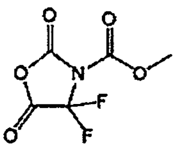
148
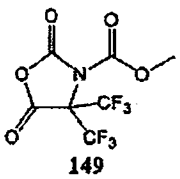
149
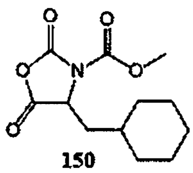
150
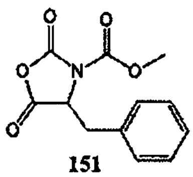
151
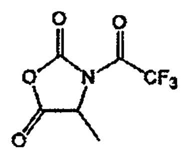
152

The compounds of the component (I) may be used singly or in any combination of two or more thereof in any ratio.

In the compounds of the component (I), the compound represented by the general formula (1), (2), or (3) is particularly preferable from the viewpoint of the initial resistance and the cycle characteristic. The compound represented by the general formula (1) or (2) is particularly preferable from the viewpoint of the initial resistance and the cycle characteristic.

The concentration of the component (I) may be, for example, 0.01 to 11% by mass, preferably 0.08 to 10.5% by mass, and more preferably 0.20 to 9% by mass, based on the total amount of the nonaqueous electrolyte solution. Within

this range, when the nonaqueous electrolyte solution of the present disclosure is used in a nonaqueous electrolyte solution battery having a negative electrode containing Si and/or a Si metal oxide and graphite as negative electrode active materials, the cycle characteristic and the initial resistance can be improved in a well-balanced manner in the obtained battery.

Component (II) (Solute)

As the solute used in the nonaqueous electrolyte solution in the present disclosure, various solutes which have been employed in the field of such a nonaqueous electrolyte solution can be employed without particular restriction. Such a solute is preferably an ionic salt composed of a pair of a cation and an anion and is not particularly limited as long as the solute is present in an ionic state as a cation and an anion in a nonaqueous organic solvent, and various solutes can be used.

Suitable examples of such a solute include at least one selected from the group consisting of $LiPF_6$, $LiBF_4$, $LiSbF_6$, $LiAsF_6$, $LiClO_4$, $LiN(SO_2F)_2$, $LiAlO_2$, $LiAlCl_4$, LiCl, and LiI or at least one selected from the group consisting of $NaPF_6$, $NaBF_4$, $NaSbF_6$, $NaAsF_6$, $NaClO_4$, $NaN(SO_2F)_2$, $NaAlO_2$, $NaAlCl_4$, NaCl, and NaI.

Of these, in view of energy density, output characteristic, life, and the like of the nonaqueous electrolyte solution battery, the cation is preferably at least one selected from the group consisting of lithium, sodium, potassium, magnesium, and quaternary ammonium, and the anion is preferably at least one selected from the group consisting of a hexafluorophosphate anion, a tetrafluoroborate anion, and a bis(fluorosulfonyl)imide anion.

As the solute in the present disclosure, one type may be used alone, or two or more types may be used in any combination at any ratio according to the application.

The concentration of the solute with respect to the total amount of the nonaqueous electrolyte solution in the present disclosure is not particularly limited as long as the function as a solute can be sufficiently exhibited at the concentration, but for example, the lower limit may be 0.5 mol/L or more, preferably 0.7 mol/L or more, and further preferably 0.9 mol/L or more. The upper limit thereof may be 5 mol/L or less, preferably 4 mol/L or less, and further preferably 2 mol/L or less. When the concentration is 0.5 mol/L or more, the ionic conductivity hardly decreases, and the cycle characteristic and the output characteristic of the nonaqueous electrolyte solution battery hardly deteriorate, which is preferable. On the other hand, when the concentration is 5 mol/L or less, the viscosity of the electrolyte solution for a nonaqueous electrolyte solution battery hardly increases, and the ionic conductivity hardly decreases, which is preferable. Here, when two or more types are used as the solute, the total concentration of these solutes is preferably in the above range.

Here, when the solute is dissolved in the nonaqueous organic solvent which is explained below, the liquid temperature is not particularly limited but is, for example, preferably -20 to 80°C, and more preferably 0 to 60°C.

Component (III) (Nonaqueous Organic Solvent)

The nonaqueous organic solvent used in the nonaqueous electrolyte solution in the present disclosure is not particularly limited as long as the components (I) and (II) above can be dissolved, and any nonaqueous organic solvent can be used. Such a nonaqueous organic solvent preferably contains at least one selected from the group consisting of a cyclic ester, a chain ester, a cyclic ether, a chain ether, a sulfone compound, a sulfoxide compound, an amide compound, a nitrile compound, and an ionic liquid and more preferably contains at least one selected from the group consisting of a cyclic ester, a chain ester, a cyclic ether, a chain ether, a sulfone compound, a sulfoxide compound, and an ionic liquid. Here, the cyclic carbonate is a subordinate concept of the cyclic ester, and the chain carbonate is a subordinate concept of the chain ester.

Specific examples of the nonaqueous organic solvent used in the present disclosure include ethyl methyl carbonate (hereinafter also referred to as "EMC"), dimethyl carbonate (hereinafter also referred to as "DMC"), diethyl carbonate (hereinafter also referred to as "DEC"), methyl propyl carbonate (hereinafter also referred to as "MPC"), ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, bis(2,2,2-trifluoroethyl) carbonate, 1,1,1,3,3,3-hexafluoro-1-propylmethyl carbonate, 1,1,1,3,3,3-hexafluoro-1-propylethyl carbonate, 1,1,1,3,3,3-hexafluoro-1-propylpropyl carbonate, bis(1,1,1,3,3,3-hexafluoro-1-propyl) carbonate, ethylene carbonate (hereinafter also referred to as "EC"), propylene carbonate (hereinafter also referred to as "PC"), butylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, tetrahydrofuran, 2-methyltetrahydrofuran, furan, tetrahydropyran, 1,3-dioxane, 1,4-dioxane, N,N-dimethylformamide, acetonitrile, propionitrile, dimethyl sulfoxide, sulfolane, γ-butyrolactone, and γ-valerolactone, and at least one of the specific examples may be contained.

The nonaqueous organic solvent preferably contains at least one selected from the group consisting of a cyclic ester and a chain ester because the input and output characteristic at a low temperature is excellent.

Further, the nonaqueous organic solvent preferably contains at least one selected from the group consisting of a cyclic carbonate and a chain carbonate because the cycle characteristic at a high temperature is excellent.

It is preferable that the nonaqueous organic solvent contains a cyclic ester and that the cyclic ester contains a cyclic carbonate.

Specific examples of the cyclic carbonate include, for example, EC, PC, and butylene carbonate, and of these, at least one selected from the group consisting of EC and PC is preferably contained.

It is also preferable that the nonaqueous organic solvent contains a chain ester and that the chain ester contains a chain carbonate.

Specific examples of the chain carbonate include, for example, EMC, DMC, DEC, MPC, ethyl propyl carbonate, 2,2,2-trifluoroethyl methyl carbonate, 2,2,2-trifluoroethyl ethyl carbonate, 1,1,1,3,3,3-hexafluoro-1-propylmethyl carbonate, and 1,1,1,3,3,3-hexafluoro-1-propylethyl carbonate, and of these, at least one selected from the group consisting of EMC, DMC, DEC, and MPC is preferably contained.

Specific examples of the chain ester include, for example, methyl acetate, ethyl acetate, methyl propionate, ethyl propionate, methyl 2-fluoropropionate, ethyl 2-fluoropropionate, and methyl 3,3,3-trifluoropropionate.

As the nonaqueous organic solvent of the present disclosure, one type may be used alone, or two or more types may be used in any combination at any ratio according to the application. Of these, from the viewpoint of the electrochemical stability against oxidation and reduction thereof and the chemical stability relating to heat or the reaction with the solute, in particular, at least one selected from the group consisting of PC, EC, DEC, DMC, and EMC is preferably contained.

The concentration of the nonaqueous organic solvent in the present disclosure is not particularly limited as long as the nonaqueous organic solvent has a function as a nonaqueous organic solvent, but the concentration may be, for example, 40 to 99% by mass, preferably 50 to 95% by mass, and particularly preferably 70 to 93% by mass with respect to the total amount (100% by mass) of the nonaqueous electrolyte solution.

Other Additive

The nonaqueous electrolyte solution of the present disclosure contains the above components (I), (II), and (III) as basic constituent components, but as long as the gist of the present disclosure is not impaired, another additive which is generally used in this technical field (hereinafter also referred to as "other additive") may be added to the nonaqueous electrolyte solution of the present disclosure at any ratio.

Examples of such another additive include cyclohexylbenzene, cyclohexylfluorobenzene, biphenyl, 2-fluorobiphenyl, t-butylbenzene, t-amylbenzene, 2-fluorotoluene, fluorobenzene, vinylene carbonate, an oligomer of vinylene carbonate (having a number average molecular weight in terms of polystyrene of 170 to 5000), vinylethylene carbonate, difluoroanisole, fluoroethylene carbonate, 1,6-diisocyanatohexane, ethynylethylene carbonate, trans-difluoroethylene carbonate, methyl propargyl carbonate, ethyl propargyl carbonate, dipropargyl carbonate, maleic anhydride, succinic anhydride, 1,3-propanesultone, 1,3-propenesultone, 1,4-butanesultone, dimethylvinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, tris(trimethylsilyl)borate, succinonitrile, (ethoxy)pentafluorocyclotriphosphazene, tetrafluoro(picolinato)phosphate, difluoro(picolinato)borate, and 1,3-dimethyl-1,3-divinyl-1,3-di(1,1,1,3,3,3-hexafluoroisopropyl)disiloxane.

Moreover, examples of the other additive include lithium difluorophosphate, sodium difluorophosphate, lithium fluorosulfate, sodium fluorosulfate, lithium trifluoromethanesulfonate, sodium trifluoromethanesulfonate, lithium nonafluorobutanesulfonate, sodium nonafluorobutanesulfonate, lithium difluorobis(oxalato)phosphate, sodium difluorobis(oxalato)phosphate, lithium difluorooxalatoborate, sodium difluorooxalatoborate, lithium bis(oxalato)borate, sodium bis(oxalato)borate, lithium tetrafluorooxalatophosphate, sodium tetrafluorooxalatophosphate, lithium tris(oxalato)phosphate, sodium tris(oxalato)phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide, sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl)imide, lithium tris(trifluoromethanesulfonyl)methide, sodium tris(trifluoromethanesulfonyl)methide, carboxylates such as lithium acrylate, sodium acrylate, lithium methacrylate, and sodium methacrylate, sulfate ester salts such as lithium methyl sulfate, sodium methyl sulfate, lithium ethyl sulfate, and sodium ethyl sulfate, lithium nitrate, lithium nitrite, sodium nitrate, and sodium nitrite.

In the present disclosure, the concentration of the other additive may be, for example, 0.01% by mass to 10% by mass with respect to the total amount of the nonaqueous electrolyte solution.

Moreover, the nonaqueous electrolyte solution of the present disclosure may further contain a compound represented by the following general formula (5) in order to improve the cycle capacity retention rate and the gas generation during a cycle test.

[Chem. 21]

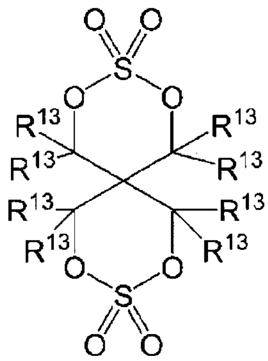

(5)

In the general formula (5), $R^{13}$'s each independently represent a hydrogen atom, a halogen atom, or an alkyl group having 1 to 12 carbon atoms, and an oxygen atom may be inserted between any carbon atom-carbon atom bond in the alkyl group. Moreover, any hydrogen atom of the alkyl group may be substituted with a fluorine atom. The range of the alkyl group includes the range of the alkyl group having 1 to 10 carbon atoms explained above and alkyl groups having up to 12 carbon atoms.

The compounds of the general formula (5) can all be easily produced or prepared by those skilled in the art by a known preparation method. Specifically, the compounds represented by the general formula (5) can be prepared, for example, by a method disclosed in a document such as Can. J. Chem., 79, 1040-1048 (2001).

Suitable examples of such a compound include the compound 1-1 or 1-2 below.

[Chem. 22]

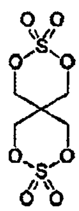

Compound 1-1

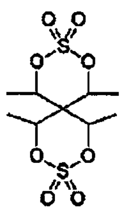

Compound 1-2

The concentration of such a compound may be, for example, 0.01 to 10% by mass, and preferably 0.1 to 5% by mass, with respect to the total amount of the nonaqueous electrolyte solution of the present disclosure.

Moreover, the nonaqueous electrolyte solution of the present disclosure may further contain a compound represented by the following general formula (6) in order to improve the cycle capacity retention rate and the gas generation during a cycle test.

[Chem. 23]

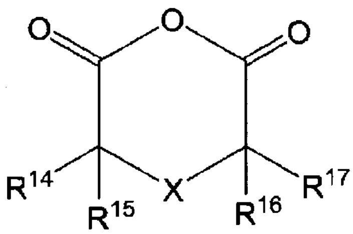

(6)

In the general formula (6), $R^{14}$ to $R^{17}$ each independently represent a hydrogen atom, a halogen atom, an alkyl group, an alkenyl group, or an aryl group. X represents an oxygen atom, a sulfur atom, or an $SO_2$ group.

The compound of the formula (6) is preferably a compound represented by the following formula from the viewpoint of the initial resistance.

[Chem. 24]

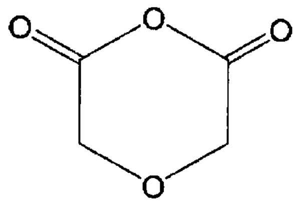

The compounds of the general formula (6) can all be easily produced or prepared by those skilled in the art by a known preparation method. For example, the compound represented by the formula above is a known compound and is commercially available from Tokyo Chemical Industry Co., Ltd., for example.

The concentration of such a compound may be, for example, 0.01 to 10% by mass, and preferably 0.1 to 5% by mass, with respect to the total amount of the nonaqueous electrolyte solution of the present disclosure.

In addition, the nonaqueous electrolyte solution of the present disclosure can also contain a polymer, and as in the case of being used in a nonaqueous electrolyte solution battery referred to as a polymer battery, the nonaqueous electrolyte solution can be quasi-solidified with a gelling agent or a cross-linked polymer before use. The polymer solid electrolyte includes one containing a nonaqueous organic solvent as a plasticizer.

Nonaqueous Electrolyte Solution Battery

The configuration of the nonaqueous electrolyte solution battery in which the nonaqueous electrolyte solution of the present disclosure is used will be explained.

The nonaqueous electrolyte solution battery in the present disclosure has basically configuration which is used for a general nonaqueous electrolyte solution battery. That is, the nonaqueous electrolyte solution battery includes a positive electrode and a negative electrode capable of occluding and discharging lithium, a current collector, a separator, a container, and the like. In particular, when the nonaqueous electrolyte solution of the present disclosure is applied to a nonaqueous electrolyte solution battery including a negative electrode containing Si and/or a Si metal oxide and graphite as negative electrode active materials, which is desired from the viewpoint of increasing the capacity, both characteristics of the cycle characteristic and the initial resistance can be improved in a well-balanced manner; whereas such an improvement could not be achieved so far.

That is, when the nonaqueous electrolyte solution of the present disclosure is used in a nonaqueous electrolyte solution battery having a negative electrode containing Si and/or a Si metal oxide and graphite as negative electrode active materials, it is possible to provide a nonaqueous electrolyte solution battery capable of improving the capacity retention rate after cycles and the initial resistance in a well-balanced manner. Here, the nonaqueous electrolyte solution battery of the present disclosure is preferably a nonaqueous electrolyte solution secondary battery.

[Positive Electrode]

The positive electrode can include, as a positive electrode active material, at least one selected from the group consisting of an oxide containing at least nickel and a phosphate containing nickel.

[Positive Electrode Active Material]

In the case of a lithium ion battery in which cations in the nonaqueous electrolyte solution are mainly lithium, the positive electrode active material constituting the positive electrode is not particularly limited as long as the positive electrode active material has at least one selected from the group consisting of an oxide containing nickel and a phosphate containing nickel and is of various materials which can be charged and discharged, but examples thereof include those containing at least one selected from the group consisting of (A) a lithium-transition metal oxide composite containing nickel or one or more metals selected from the group consisting of manganese, cobalt, and aluminum in addition to nickel and having a layered structure, (B) a lithium-manganese oxide composite having a spinel structure and containing nickel, (C) a lithium-containing olivine-type phosphate containing nickel, and (D) a lithium-excess layered transition metal oxide

having a layered rocksalt structure and containing nickel.

((A) Lithium-Transition Metal Oxide Composite)

Positive Electrode Active Material (A)

Suitable examples of the lithium-transition metal oxide composite containing nickel or one or more metals selected from the group consisting of manganese, cobalt, and aluminum in addition to nickel and having a layered structure include lithium-nickel oxide composites, lithium-nickel-cobalt oxide composites, lithium-nickel-cobalt-aluminum oxide composites, lithium-nickel-manganese oxide composites, and lithium-nickel-manganese-cobalt oxide composites. Moreover, those in which a part of the transition metal atoms that are main components of these lithium-transition metal oxide composites has been substituted with other elements such as Al, Ti, V, Cr, Fe, Cu, Zn, Mg, Ga, Zr, Si, B, Ba, Y, and Sn may also be used.

As specific examples of the lithium-nickel oxide composite, $LiNiO_2$, $LiNiO_2$ to which different elements such as Mg, Zr, Al, and Ti are added, and one in which particle surfaces of $LiNiO_2$ particle powder are partly coated with aluminum oxide may be used.

The lithium-nickel-cobalt oxide composite and the lithium-nickel-cobalt-aluminum oxide composite are represented by the following general formula [1-1].

$$Li_aNi_{1-b-c}Co_bM^1{}_cO_2 \qquad [1\text{-}1]$$

In the formula [1-1], $M^1$ is at least one element selected from the group consisting of Al, Fe, Mg, Zr, Ti, and B. a satisfies $0.9 \leq a \leq 1.2$, and b and c satisfy the conditions $0.1 \leq b \leq 0.3$ and $0 \leq c \leq 0.1$.

These oxide composites can be prepared, for example, according to the production method described in JP2009-137834A. Suitable specific examples thereof include $LiNi_{0.8}Co_{0.2}O_2$, $LiNi_{0.85}Co_{0.10}Al_{0.05}O_2$, $LiNi_{0.87}Co_{0.10}Al_{0.03}O_2$, and $LiNi_{0.6}Co_{0.3}Al_{0.1}O_2$.

Specific examples of the lithium-nickel-manganese oxide composite include $LiNi_{0.5}Mn_{0.5}O_2$ and $LiCo_{0.5}Mn_{0.5}O_2$.

Examples of the lithium-nickel-manganese-cobalt oxide composite include a lithium-containing oxide composite represented by the following general formula [1-2].

$$Li_dNi_eMn_fCo_gM^2{}_h \qquad [1\text{-}2]$$

In the formula [1-2], $M^2$ is at least one element selected from the group consisting of Al, Fe, Mg, Zr, Ti, B, and Sn. d satisfies $0.9 \leq d \leq 1.2$, and e, f, g, and h satisfy the conditions $e + f + g + h = 1$, $0 < e \leq 0.9$, $0 < f \leq 0.5$, $0 < g \leq 0.5$, and $h \geq 0$.

The lithium-nickel-manganese-cobalt oxide composite preferably contains manganese within the range shown in the general formula [1-2] in order to improve the structural stability and improve the safety at a high temperature in a lithium battery and, in particular, more preferably further contains cobalt within the range shown in the general formula [1-2] in order to improve the high rate characteristic of the lithium ion battery.

Specifically, suitable examples thereof include $Li[Ni_{1/3}Mn_{1/3}Co_{1/3}]O_2$ (hereinafter sometimes referred to as "NCM111"), $Li[Ni_{0.45}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$ (hereinafter sometimes referred to as "NCM622"), $Li[Ni_{0.8}Mn_{0.1}Co_{0.1}]O_2$ (hereinafter sometimes referred to as "NCM811"), $Li[Ni_{0.49}Mn_{0.3}Co_{0.2}Zr_{0.01}]O_2$, and $Li[Ni_{0.46}Mn_{0.3}Co_{0.2}Mg_{0.01}]O_2$, which have a charging/discharging region at 4.3 V or more.

((B) Lithium-Manganese Oxide Composite Having Spinel Structure)

Positive Electrode Active Material (B)

Examples of the lithium-manganese oxide composite having a spinel structure include a spinel-type lithium-manganese oxide composite represented by the general formula [1-3].

$$Li_j(Mn_{2-k}M^3{}_k)O_4 \qquad [1\text{-}3]$$

In the formula [1-3], $M^3$ contains Ni and may contain at least one metal element selected from the group consisting of Co, Fe, Mg, Cr, Cu, Al, and Ti in addition thereto. j satisfies $1.05 \leq j \leq 1.15$, and k satisfies $0 < k \leq 0.20$.

Specific examples thereof include $LiMn_{1.9}Ni_{0.1}O_4$ and $LiMn_{1.5}Ni_{0.5}O_4$.

((C) Lithium-Containing Olivine-Type Phosphate)

Positive Electrode Active Material (C)

Examples of the lithium-containing olivine-type phosphate include those represented by the following general formula [1-4].

$$LiFe_{1-n}M^4{}_nPO_4 \qquad [1-4]$$

In the formula [1-4], $M^4$ contains Ni and may contain at least one selected from Co, Mn, Cu, Zn, Nb, Mg, Al, Ti, W, Zr, and Cd in addition thereto, and n satisfies $0 < n \leq 1$.

Specifically, suitable examples thereof include $LiNiPO_4$.

((D) Lithium-Excess Layered Transition Metal Oxide)

Positive Electrode Active Material (D)

Examples of the lithium-excess layered transition metal oxide having a layered rocksalt structure include those represented by the following general formula [1-5].

$$xLiM^5O_2\cdot(1-x)Li_2M^6O_3 \qquad [1-5]$$

In the formula [1-5], x is a number satisfying $0 < x < 1$, and $M^5$ is at least one metal element having an average oxidation number of $3^+$. $M^6$ is at least one metal element having an average oxidation number of $4^+$. In the formula [1-5], $M^5$ is preferably one or more metal elements selected from trivalent Mn, Ni, Co, Fe, V, and Cr, but the average oxidation number may be set to 3 with equal amounts of divalent and tetravalent metals.

Moreover, in the formula [1-5], $M^6$ is preferably one or more metal elements selected from Mn, Zr, and Ti. Here, nickel is always contained in either $M^5$ or $M^6$. Specifically, suitable examples thereof include $0.5[LiNi_{0.5}Mn_{0.5}O_2]\cdot 0.5[Li_2MnO_3]$, $0.5[LiNi_{1/3}Co_{1/3}Mn_{1/3}O_2]\cdot 0.5[Li_2MnO_3]$, $0.5[LiNi_{0.375}Co_{0.25}Mn_{0.375}O_2]\cdot 0.5[Li_2MnO_3]$, $0.5[LiNi_{0.375}Co_{0.125}Fe_{0.125}Mn_{0.375}O_{22}]\cdot 0.5[Li_2MnO_3]$, and $0.45[LiNi_{0.375}Co_{0.25}Mn_{0.375}O_2]\cdot 0.10[Li_2TiO_3]\cdot 0.45[Li_2MnO_3]$.

The positive electrode active material (D) represented by the general formula [1-5] is known to exhibit a high capacity in high-voltage charge at 4.4 V or higher (in terms of Li) (for example, U.S. patent 7,135,252).

These positive electrode active materials can be prepared, for example, according to the production methods described in JP2008-270201A, WO2013/118661, and JP2013-030284A.

The positive electrode active material may contain at least one selected from (A) to (D) above as a main component, and examples of other contained components include transition element chalcogenides such as $FeS_2$, $TiS_2$, $TiO_2$, $V_2O_5$, $MoO_3$, and $MoS_2$, conductive polymers such as polyacetylene, polyparaphenylene, polyaniline, and polypyrrole, activated carbon, radical-generating polymers, and carbon materials.

[Positive Electrode Current Collector]

The positive electrode has a positive electrode current collector. As the positive electrode current collector, for example, aluminum, stainless steel, nickel, titanium, or alloys thereof can be used.

[Positive Electrode Active Material Layer]

In the positive electrode, for example, a positive electrode active material layer is formed on at least one surface of the positive electrode current collector. The positive electrode active material layer includes, for example, the positive electrode active material described above, a binder, and, when necessary, an electrically conductive agent.

Examples of the binder include polytetrafluoroethylene, polyvinylidene fluoride, tetrafluoroethylene-perfluoroalkyl vinyl ether copolymers, styrene-butadiene rubber (hereinafter also referred to as "SBR"), carboxymethyl cellulose, methylcellulose, cellulose acetate phthalate, hydroxypropyl methylcellulose, and polyvinyl alcohol.

As the electrically conductive agent, for example, carbon materials such as acetylene black, Ketjen black, furnace black, carbon fibers, graphite (granular graphite and flake graphite), and fluorinated graphite can be used. For the positive electrode, acetylene black or Ketjen black with low crystallinity or the like is preferably used.

[Negative Electrode]

As the negative electrode active materials, Si and/or a Si metal oxide and graphite are used as described above.

Specifically, the negative electrode active materials in the present disclosure contain Si and/or a Si metal oxide

and graphite. The Si metal oxide is a compound represented by SiOx. Here, x has a value of 0.5 to 1.5. The negative electrode active materials may contain a silicon metal or may contain a Si metal oxide (SiOx).

The total content of the Si and/or the Si metal oxide contained in the negative electrode active materials may be 0.1 to 50% by mass and preferably 0.1 to 30% by mass, when the total amount of the Si and/or the Si metal oxide and the graphite contained in the negative electrode active materials is 100% by mass.

As the graphite contained in the negative electrode active material, various types of artificial graphite and natural graphite are used. With graphite, the change in crystal structure due to occlusion and release of lithium is very small, and thus a high energy density and excellent cycle characteristic can be obtained. The shape of the graphite may be any of a fibrous shape, a spherical shape, a granular shape, and a scale-like shape. Amorphous carbon or graphite coated with amorphous carbon on the surface is more preferable because the reactivity between the surface of the material and the electrolyte solution is low.

When the graphite is used in a particulate form, the particle size thereof in terms of the average particle diameter d50 may be, for example, 5 to 30 μm, and preferably 8 to 15 μm.

The graphite is one capable of doping and dedoping lithium ions in the case of a lithium ion battery in which the cations in the nonaqueous electrolyte solution are mainly lithium, and examples thereof include graphite in which the d value of the lattice plane (002 plane) in X-ray diffraction is 0.340 nm or less and graphite in which the d value of the lattice plane (002 plane) in X-ray diffraction exceeds 0.340 nm. One type of these negative electrode active materials can be used alone, or two or more types thereof can be used in combination.

[Negative Electrode Current Collector]

The negative electrode has a negative electrode current collector. As the negative electrode current collector, for example, copper, stainless steel, nickel, titanium, or alloys thereof can be used.

[Negative Electrode Active Material Layer]

In the negative electrode, for example, a negative electrode active material layer is formed on at least one surface of the negative electrode current collector. The negative electrode active material layer includes, for example, the negative electrode active material described above, a binder, and, when necessary, an electrically conductive agent.

Examples of the binder include polytetrafluoroethylene, polyvinylidene fluoride, tetrafluoroethylene-perfluoroalkyl vinyl ether copolymers, SBR, carboxymethyl cellulose, methylcellulose, cellulose acetate phthalate, hydroxypropyl methylcellulose, and polyvinyl alcohol.

As the electrically conductive agent, for example, carbon materials such as acetylene black, Ketjen black, furnace black, and carbon fibers can be used.

[Production Methods of Electrodes (Positive Electrode and Negative Electrode)]

For example, an electrode can be obtained by dispersing and kneading predetermined blending amounts of an active material, a binder, and, if necessary, an electrically conductive agent in a solvent such as N-methyl-2-pyrrolidone (hereinafter also referred to as "NMP") and water, applying the obtained paste on a current collector and drying to form an active material layer. The obtained electrode is preferably compressed by a method such as roll pressing to adjust the electrode to an appropriate density.

[Separator]

The nonaqueous electrolyte solution battery of the present disclosure can have a separator. As a separator for preventing contact between the positive electrode and the negative electrode, for example, a nonwoven fabric or a porous sheet made of polyolefin such as polypropylene and polyethylene, cellulose, paper, glass fibers, or the like is used. These films are preferably microporous so that the electrolyte solution easily permeates and so that the ions easily pass through.

Examples of the polyolefin separator include a film that electrically insulates the positive electrode and the negative electrode and that is permeable to lithium ions such as microporous polymer films including a porous polyolefin film. As a specific example of the porous polyolefin film, for example, a porous polyethylene film alone or a multilayer film obtained by stacking a porous polyethylene film and a porous polypropylene film may be used. Another example is a film obtained by combining a porous polyethylene film and a polypropylene film.

The nonaqueous electrolyte solution of the present disclosure may be impregnated and held in the separator. The impregnation method is not particularly restricted and may be performed by a known method. Specifically, the impregnation can be conducted by injecting the electrolyte solution to a battery having a positive electrode, a separator, and a negative electrode at the end.

[Exterior Body]

As the exterior body of the nonaqueous electrolyte solution battery of the present disclosure, for example, a coin-shaped, cylindrical, or square-shaped metal can or a laminated exterior body can be suitably used. Suitable examples of the metal can material include nickel-plated steel plates, stainless steel plates, nickel-plated stainless steel plates, aluminum or alloys thereof, nickel, and titanium. As the laminated exterior body, for example, an aluminum laminated film, a SUS laminated film, or a silica-coated laminated film of polypropylene, polyethylene, or the like can be used.

The configuration of the nonaqueous electrolyte solution battery according to the present embodiment is not particularly restricted but can be, for example, a configuration in which an electrode element including a positive electrode and a negative electrode arranged to face each other and a nonaqueous electrolyte solution are included in an exterior body. The shape of the nonaqueous electrolyte solution battery is not particularly limited, but an electrochemical device having a shape such as a coin shape, a cylindrical shape, a square shape, and an aluminum laminate sheet shape is assembled with the above elements.

The nonaqueous electrolyte solution battery including the nonaqueous electrolyte solution of the present disclosure can be produced by, for example, impregnating a separator with the nonaqueous electrolyte solution described above and arranging the separator between a positive electrode having at least one selected from the group consisting of an oxide containing nickel and a phosphate as a positive electrode active material and a negative electrode containing Si and/or a Si metal oxide and graphite as negative electrode active materials to assemble the cell.

EXAMPLES

Hereinafter, the present disclosure will be more specifically explained with Examples, Comparative Examples, and Reference Examples, but the scope of the present disclosure is not limited at all by the Examples, the Comparative Examples, and the Reference Examples.

[Preparation of Nonaqueous Electrolyte Solutions of Examples, Comparative Examples, and Reference Examples]

Comparative Example 0:

EC, DMC, and EMC were used as nonaqueous organic solvents, and FEC was used as another additive. These materials were mixed at a volume ratio of EC: FEC: DMC: EMC = 3: 0.2: 3: 3.8. Next, lithium hexafluorophosphate ($LiPF_6$) as a solute was added and dissolved in such a manner that the content in the nonaqueous electrolyte solution became 1.00 mol/L to prepare a base nonaqueous electrolyte solution.

Examples 1-1 to 1-7:

A nonaqueous electrolyte solution 1-1 of an Example was prepared by dissolving the following compound (1a) as a compound represented by the general formula (1) in Comparative Example 0 (the base nonaqueous electrolyte solution) at the concentration shown in Table 1 below. In the same manner, nonaqueous electrolyte solutions 1-2 to 1-7 of Examples 1-2 to 1-7 were prepared by changing the concentration of the compound (1a).

[Chem. 25]

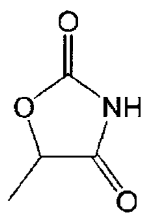

(1a)

Comparative Examples 1 to 5:

Comparative nonaqueous electrolyte solutions 1 to 5 of Comparative Examples 1-1 to 1-5 were prepared in the same manner as in Example 1-3 except that the following compounds (comparative compounds) different from the compound represented by the general formula (1) in Example 1-1 were used.

[Chem. 26]

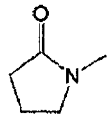
(D1-1)

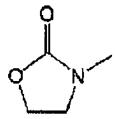
(D1-2)

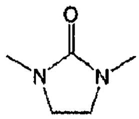
(D1-3)

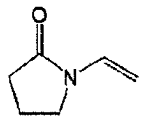
(D1-4)

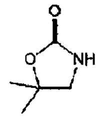
(D3-1)

Reference Examples 1-1 to 1-6:

Reference Examples 1-1 to 1-6 (and Comparative Example 0a) relate to the same nonaqueous electrolyte solutions as those of Examples 1-1 to 1-7 (and Comparative Example 0), but Examples 1-1 to 1-7 (and Comparative Example 0) were prepared to be used for a nonaqueous electrolyte solution battery including a negative electrode containing Si and/or a Si metal oxide and graphite as negative electrode active materials (specifically, the "silicon-containing graphite negative electrode" described below) whereas Reference Examples 1-1 to 1-6 (and Comparative Example 0a) were prepared to be used for a nonaqueous electrolyte solution battery including a negative electrode using graphite as a negative electrode active material (specifically, the "graphite negative electrode" described below). That is, the effect of action of a difference in the negative electrode configuration was evaluated using nonaqueous electrolyte solutions having the same compositions.

Production of NCM811 Positive Electrode:

In 92.0% by mass of $Li[Ni_{0.8}Mn_{0.1}Co_{0.1}]O_2$ powder, 3.5% by mass of polyvinylidene fluoride (hereinafter also referred to as "PVDF") as a binder and 4.5% by mass of acetylene black as a conductive material were mixed, and 45% by mass of NMP with respect to the total mass of the $Li[Ni_{0.8}Mn_{0.1}Co_{0.1}]O_2$ powder, the binder, and the conductive material was added to produce a positive electrode mixture paste. The paste was applied onto both sides of an aluminum foil (A1085), dried, pressed and then punched into 4 cm × 5 cm to obtain an NCM811 positive electrode for testing.

Production of Silicon-Containing Graphite Negative Electrode:

By mixing 85% by mass of artificial graphite powder, 7% by mass of nanosilicon, 3% by mass of a conductive material (HS-100 manufactured by Denka Company Limited), 2% by mass of carbon nanofiber (VGCF manufactured by Showa Denko K.K.), 2% by mass of styrene-butadiene rubber, and 1% by mass of sodium carboxymethyl cellulose (hereinafter also referred to as "CMC") and further mixing water, a negative electrode mixture paste was produced. The paste was applied onto a copper foil, dried, pressed and then punched into 4.5 cm × 5.5 cm to obtain a silicon-containing graphite negative electrode for testing. In the following tables, the active material of the negative electrode is referred to as "Si-Graphite".

Production of Graphite Negative Electrode:

A graphite negative electrode was produced by the same procedures as in the production of the silicon-containing graphite negative electrode except that "85% by mass of artificial graphite powder and 7% by mass of nanosilicon" were changed to "92% by mass of artificial graphite powder".

Production of Nonaqueous Electrolyte Solution Secondary Battery (hereinafter simply referred to as "Nonaqueous Electrolyte Solution Battery" or "Cell"):

Under an argon atmosphere at a dew point of -50°C or lower, a terminal was welded to the above NCM811 positive electrode, and then one polyethylene separator (5 cm × 6 cm) was placed on each side thereof. Further, one silicon-containing graphite negative electrode to which a terminal had been welded in advance was placed on the outside of each side thereof to sandwich the separator between the positive electrode and the negative electrode in such a manner that the surface of the negative electrode active material faced the surface of the positive electrode active material. The structure was put in an aluminum laminated bag having an opening on one side, and after the nonaqueous electrolyte solution prepared in an Example or a Comparative Example was vacuum-injected into the bag, the opening was sealed with heat to produce an aluminum laminated nonaqueous electrolyte solution battery. In the Reference Examples, the nonaqueous electrolyte solution batteries were produced in the same manner as described above except that the graphite negative electrode was used as the negative electrode.

[Evaluation Conditions]

(Initial Charge and Discharge)

Each nonaqueous electrolyte solution battery (cell) produced as described above was left to stand at an ambient temperature of 25°C for 12 hours (impregnation time: 12 hours) and then conditioned at an ambient temperature of 25°C under the following conditions. That is, as initial charge and discharge, a charge and discharge cycle including constant-current constant-voltage charging at an upper limit charge voltage of 4.3 V and at 0.1 C rate (9 mA), discharging at 0.2 C rate constant current to a discharge end voltage of 2.7 V, subsequent constant-current constant-voltage charging at an upper limit charge voltage of 4.3 V and at 0.2 C rate, and discharging at 0.2 C rate constant current to a discharge end voltage of 2.7 V was repeated three times.

(Initial Resistance)

The cell subjected to the conditioning was charged to 4.3 V at 25°C and 0.2 C rate, and then the resistance value was measured by performing impedance measurement in an environment at -20°C and used as the initial resistance value.

(Cycle Characteristic)

The cell after the measurement of the initial resistance was subjected to a charge and discharge test at an ambient temperature of 25°C to evaluate the cycle characteristic. A charge and discharge cycle was repeated at a current value of 90 mA by a constant-current constant-voltage method at an upper limit charge voltage of 4.3 V and a lower limit discharge voltage of 2.7 V. Further, the degree of deterioration of the cell was evaluated with the discharge capacity retention rate at the 400th cycle in the charge and discharge test at an ambient temperature of 25°C. The "discharge capacity retention rate after cycles" expressed as the discharge capacity retention rate at the 400th cycle was determined using the following equation. The discharge capacity at the first cycle in the charge and discharge test at the ambient temperature of 25°C was defined as the initial discharge capacity.

Discharge capacity retention rate (%) after cycles = (discharge capacity at 400th cycle/initial discharge capacity) × 100

Here, the results of the initial resistance and the cycle characteristic were expressed as relative values based on the results of the base nonaqueous electrolyte solution (Comparative Example 0 or 0a) regarded as 100. The same applies below.

[Table 1]

Table 1

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | | Base nonaqueous electrolyte solution | - | - | 100 | 100 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Example 1-1 | Si-Graphite | Nonaqueous electrolyte solution 1-1 | (1a) | 0.1 | 94.2 | 103.4 |
| Example 1-2 | | Nonaqueous electrolyte solution 1-2 | | 0.5 | 91.6 | 107.7 |
| Example 1-3 | | Nonaqueous electrolyte solution 1-3 | | 1 | 86.5 | 121.5 |
| Example 1-4 | | Nonaqueous electrolyte solution 1-4 | | 2 | 87.2 | 122.7 |
| Example 1-5 | | Nonaqueous electrolyte solution 1-5 | | 3 | 89.1 | 119.2 |
| Example 1-6 | | Nonaqueous electrolyte solution 1-6 | | 5 | 93.2 | 113.5 |
| Example 1-7 | | Nonaqueous electrolyte solution 1-7 | | 10 | 98.5 | 104.1 |
| Comparative Example 1 | | Comparative nonaqueous electrolyte solution 1 | D1-1 | 1 | 102.3 | 97.6 |
| Comparative Example 2 | | Comparative nonaqueous electrolyte solution 2 | D1-2 | | 100.9 | 99.4 |
| Comparative Example 3 | | Comparative nonaqueous electrolyte solution 3 | D1-3 | | 104.3 | 94.2 |
| Comparative Example 4 | | Comparative nonaqueous electrolyte solution 4 | D1-4 | | 106.7 | 98.5 |
| Comparative Example 5 | | Comparative nonaqueous electrolyte solution 5 | D3-1 | | 105.3 | 97.4 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0a | Graphite | Base nonaqueous electrolyte solution | - | - | 100 | 100 |
| Reference Example 1-1 | | Nonaqueous electrolyte solution 1-1 | (1a) | 0.1 | 99.8 | 100.8 |
| Reference Example 1-2 | | Nonaqueous electrolyte solution 1-2 | | 0.5 | 99.2 | 101.6 |
| Reference Example 1-3 | | Nonaqueous electrolyte solution 1-3 | | 1 | 98.9 | 102.2 |
| Reference Example 1-4 | | Nonaqueous electrolyte solution 1-4 | | 2 | 98.4 | 103.0 |
| Reference Example 1-5 | | Nonaqueous electrolyte solution 1-5 | | 3 | 98.9 | 102.6 |
| Reference Example 1-6 | | Nonaqueous electrolyte solution 1-6 | | 5 | 99.4 | 102.1 |

Evaluation:

As it is understood from the results in Table 1, it is seen that, in the nonaqueous electrolyte solution batteries including a negative electrode containing Si and/or a Si metal oxide and graphite as negative electrode active materials, both characteristics of the discharge capacity retention rate after cycles (hereinafter also simply referred to as "cycle characteristic") and the initial resistance of the Examples using the (I) of the present disclosure were significantly improved as compared with those of the Comparative Examples using the comparative compounds when the comparison was made between the same concentrations. Moreover, when the Examples of the present disclosure and the Reference Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 1-8 to 1-14:

A nonaqueous electrolyte solution 1-8 of an Example was prepared by dissolving the following compound (1b) as a compound represented by the general formula (1) in Comparative Example 0 (the base nonaqueous electrolyte solution) at the concentration shown in Table 2 below. In the same manner, nonaqueous electrolyte solutions 1-9 to 1-14 of Examples were prepared by changing the concentration of the compound (1b). Furthermore, nonaqueous electrolyte solution batteries were produced and evaluated in the same manner as in the Examples in Table 1.

[Chem. 27]

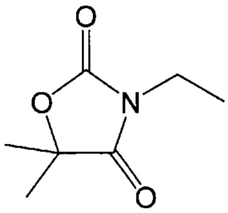

(1 b)

Reference Examples 1-7 to 1-12:

Nonaqueous electrolyte solution batteries were produced and evaluated in the same manner as in the Reference Examples in Table 1 except that the same nonaqueous electrolyte solutions as those in Examples 1-8 to 1-13 were used as the nonaqueous electrolyte solutions.

[Table 2]

Table 2

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 1100 |
| Example 1-8 | | Nonaqueous electrolyte solution 1-8 | (1b) | 0.1 | 92.8 | 105.7 |
| Example 1-9 | | Nonaqueous electrolyte solution 1-9 | | 0.5 | 90.1 | 108.9 |
| Example 1-10 | | Nonaqueous electrolyte solution 1-10 | | 1 | 84.2 | 123.4 |
| Example 1-11 | | Nonaqueous electrolyte solution 1-11 | | 2 | 85.3 | 124.2 |
| Example 1-12 | | Nonaqueous electrolyte solution 1-12 | | 3 | 87.5 | 119.8 |
| Example 1-13 | | Nonaqueous electrolyte solution 1-13 | | 5 | 91.7 | 113.7 |
| Example 1-14 | | Nonaqueous electrolyte solution 1-14 | | 10 | 98.1 | 104.6 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0a | Graphite | Base nonaqueous electrolyte solution | | - | 1100 | 1100 |
| Reference Example 1-17 | | Nonaqueous electrolyte solution 1-7 | (1b) | 0.1 | 99.7 | 101.1 |
| Reference Example 1-18 | | Nonaqueous electrolyte solution 1-8 | | 0.5 | 98.6 | 102.4 |
| Reference Example 1-19 | | Nonaqueous electrolyte solution 1-9 | | 1 | 98.4 | 103.2 |
| Reference Example 1-20 | | Nonaqueous electrolyte solution 1-10 | | 2 | 98 | 103.4 |
| Reference Example 1-21 | | Nonaqueous electrolyte solution 1-11 | | 3 | 98.3 | 103.1 |
| Reference Example 1-22 | | Nonaqueous electrolyte solution 1-12 | | 5 | 99.2 | 101.9 |

Evaluation:

Also in Table 2, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 1-15 to 1-21:

A nonaqueous electrolyte solution 1-15 of an Example was prepared by dissolving the following compound (1c) as a compound represented by the general formula (1) in Comparative Example 0 (the base nonaqueous electrolyte solution) at the concentration shown in Table 3 below. In the same manner, nonaqueous electrolyte solutions 1-16 to 1-21 of Examples were prepared by changing the concentration of the compound (1c). Furthermore, nonaqueous electrolyte solution batteries were produced and evaluated in the same manner as in the Examples in Table 1.

[Chem. 28]

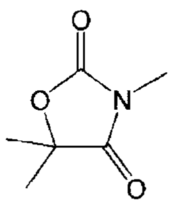

(1c)

Reference Examples 1-13 to 1-18:

Nonaqueous electrolyte solution batteries were produced and evaluated in the same manner as in the Reference

Examples in Table 1 except that the same nonaqueous electrolyte solutions as those in Examples 1-15 to 1-20 were used as the nonaqueous electrolyte solutions.

[Table 3]

Table 3

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 1-15 | | Nonaqueous electrolyte solution 1-15 | (1c) | 0.1 | 92.7 | 105.2 |
| Example 1-16 | | Nonaqueous electrolyte solution 1-16 | | 0.5 | 90.4 | 108.6 |
| Example 1-17 | | Nonaqueous electrolyte solution 1-17 | | 1 | 84.4 | 122.1 |
| Example 1-18 | | Nonaqueous electrolyte solution 1-18 | | 2 | 85.1 | 123.0 |
| Example 1-19 | | Nonaqueous electrolyte solution 1-19 | | 3 | 87.2 | 118.6 |
| Example 1-20 | | Nonaqueous electrolyte solution 1-20 | | 5 | 91.5 | 112.7 |
| Example 1-21 | | Nonaqueous electrolyte solution 1-21 | | 10 | 97.8 | 104.5 |
| Comparative Example 0a | Graphite | Base nonaqueous electrolyte solution | - | - | 100 | 100 |
| Reference Example 1-13 | | Nonaqueous electrolyte solution 1-13 | (1c) | 0.1 | 99.6 | 101.0 |
| Reference Example 1-14 | | Nonaqueous electrolyte solution 1-14 | | 0.5 | 98.4 | 102.1 |
| Reference Example 1-15 | | Nonaqueous electrolyte solution 1-15 | | 1 | 98.3 | 102.9 |
| Reference Example 1-16 | | Nonaqueous electrolyte solution 1-16 | | 2 | 98.1 | 103.2 |
| Reference Example 1-17 | | Nonaqueous electrolyte solution 1-17 | | 3 | 98.2 | 102.8 |
| Reference Example 1-18 | | Nonaqueous electrolyte solution 1-18 | | 5 | 99.1 | 101.9 |

Evaluation:

Also in Table 3, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte

solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 1-22 to 1-28:

A nonaqueous electrolyte solution 1-22 of an Example was prepared by dissolving the following compound (1d) as a compound represented by the general formula (1) in Comparative Example 0 (the base nonaqueous electrolyte solution) at the concentration shown in Table 4 below. In the same manner, nonaqueous electrolyte solutions 1-23 to 1-28 of Examples were prepared by changing the concentration of the compound (1d). Furthermore, nonaqueous electrolyte solution batteries were produced and evaluated in the same manner as in the Examples in Table 1.

[Chem. 29]

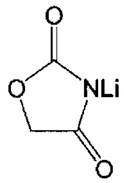

(1 d)

Reference Examples 1-19 to 1-24:

Nonaqueous electrolyte solution batteries were produced and evaluated in the same manner as in the Reference Examples in Table 1 except that the same nonaqueous electrolyte solutions as those in Examples 1-22 to 1-27 were used as the nonaqueous electrolyte solutions.

[Table 4]

Table 4

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative 0 Example 0 | Si-Graphite | Base nonaqueous electrolyte solution | - | - | 100 | 1100 |
| Example 1-22 | | Nonaqueous electrolyte solution 1-22 | (1d) | 0.1 | 93.4 | 104.7 |
| Example 1-23 | | Nonaqueous electrolyte solution 1-23 | | 0.5 | 90.6 | 107.8 |
| Example 1-24 | | Nonaqueous electrolyte solution 1-24 | | 1 | 85.7 | 119.8 |
| Example 1-25 | | Nonaqueous electrolyte solution 1-25 | | 2 | 86.3 | 121.6 |
| Example 1-26 | | Nonaqueous electrolyte solution 1-26 | | 3 | 87.8 | 118.6 |
| Example 1-27 | | Nonaqueous electrolyte solution 1-27 | | 5 | 91.9 | 111.8 |
| Example 1-28 | | Nonaqueous electrolyte solution 1-28 | | 10 | 96.8 | 103.7 |
| Comparative Example 0a | Graphite | Base nonaqueous electrolyte solution | - | - | 100 | 100 |
| Reference Example 1-19 | | Nonaqueous electrolyte solution 1-19 | (1d) | 0.1 | 99.7 | 100.6 |
| Reference Example 1-20 | | Nonaqueous electrolyte solution 1-20 | | 0.5 | 98.6 | 101.4 |
| Reference Example 1-21 | | Nonaqueous electrolyte solution 1-21 | | 1 | 98.1 | 102.3 |
| Reference Example 1-22 | | Nonaqueous electrolyte solution 1-22 | | 2 | 97.8 | 102.8 |
| Reference Example 1-23 | | Nonaqueous electrolyte solution 1-23 | | 3 | 98.2 | 102.5 |
| Reference Example 1-24 | | Nonaqueous electrolyte solution 1-24 | | 5 | 99.3 | 101.6 |

Evaluation:

Also in Table 4, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 1-29 to 1-35:

A nonaqueous electrolyte solution 1-29 of an Example was prepared by dissolving the following compound (1e)

as a compound represented by the general formula (1) in Comparative Example 0 (the base nonaqueous electrolyte solution) at the concentration shown in Table 5 below. In the same manner, nonaqueous electrolyte solutions 1-30 to 1-35 of Examples were prepared by changing the concentration of the compound (1e). Furthermore, nonaqueous electrolyte solution batteries were produced and evaluated in the same manner as in the Examples in Table 1.

[Chem. 30]

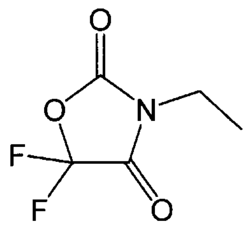

(1 e)

Reference Examples 1-25 to 1-30:

Nonaqueous electrolyte solution batteries were produced and evaluated in the same manner as in the Reference Examples in Table 1 except that the same nonaqueous electrolyte solutions as those in Examples 1-29 to 1-34 were used as the nonaqueous electrolyte solutions.

[Table 5]

Table 5

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 1-29 | | Nonaqueous electrolyte solution 1-29 | (1e) | 0.1 | 91.4 | 105.4 |
| Example 1-30 | | Nonaqueous electrolyte solution 1-30 | | 0.5 | 87.6 | 111.8 |
| Example 1-31 | | Nonaqueous electrolyte solution 1-31 | | 1 | 82.8 | 123.4 |
| Example 1-32 | | Nonaqueous electrolyte solution 1-32 | | 2 | 83.6 | 122.6 |
| Example 1-33 | | Nonaqueous electrolyte solution 1-33 | | 3 | 85.4 | 120.1 |
| Example 1-34 | | Nonaqueous electrolyte solution 1-34 | | 5 | 89.9 | 113.4 |
| Example 1-35 | | Nonaqueous electrolyte solution 1-35 | | 10 | 95.9 | 104.2 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0a | Graphite | Base nonaqueous electrolyte solution | - | - | 100 | 100 |
| Reference Example 1-25 | | Nonaqueous electrolyte solution 1-25 | (1e) | 0.1 | 98.7 | 100.7 |
| Reference Example 1-26 | | Nonaqueous electrolyte solution 1-26 | | 0.5 | 98.2 | 101.6 |
| Reference Example 1-27 | | Nonaqueous electrolyte solution 1-27 | | 1 | 97.8 | 102.0 |
| Reference Example 1-28 | | Nonaqueous electrolyte solution 1-28 | | 2 | 97.4 | 102.4 |
| Reference Example 1-29 | | Nonaqueous electrolyte solution 1-29 | | 3 | 97.8 | 101.8 |
| Reference Example 1-30 | | Nonaqueous electrolyte solution 1-30 | | 5 | 98.8 | 101.2 |

Evaluation:

Also in Table 5, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 1-36 to 1-42:

A nonaqueous electrolyte solution 1-36 of an Example was prepared by dissolving the following compound (1f) as a compound represented by the general formula (1) in Comparative Example 0 (the base nonaqueous electrolyte solution) at the concentration shown in Table 6 below. In the same manner, nonaqueous electrolyte solutions 1-37 to 1-42 of Examples were prepared by changing the concentration of the compound (1f). Furthermore, nonaqueous electrolyte solution batteries were produced and evaluated in the same manner as in the Examples in Table 1.

[Chem. 31]

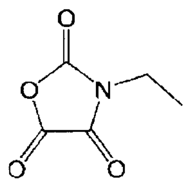

(1f)

Reference Examples 1-31 to 1-36:

Nonaqueous electrolyte solution batteries were produced and evaluated in the same manner as in the Reference Examples in Table 1 except that the same nonaqueous electrolyte solutions as those in Examples 1-36 to 1-41 were used

as the nonaqueous electrolyte solutions.

[Table 6]

Table 6

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] - | | |
| Comparative Example 0 | Si-Graphite | Base nonaqueous electrolyte solution - | - | | 100 | 100 |
| Example 1-36 | | Nonaqueous electrolyte solution 1-36 | (1f) | 0.1 | 90.6 | 104.3 |
| Example 1-37 | | Nonaqueous electrolyte solution 1-37 | | 0.5 | 85.4 | 109.9 |
| Example 1-38 | | Nonaqueous electrolyte solution 1-38 | | 1 | 80.9 | 120.8 |
| Example 1-39 | | Nonaqueous electrolyte solution 1-39 | | 2 | 81.6 | 119.2 |
| Example 1-40 | | Nonaqueous electrolyte solution 1-40 | | 3 | 83.6 | 117.8 |
| Example 1-41 | | Nonaqueous electrolyte solution 1-41 | | 5 | 87.4 | 111.9 |
| Example 1-42 | | Nonaqueous electrolyte solution 1-42 | | 10 | 95.7 - | 103.6 |
| Comparative Example 0a | Graphite | Base nonaqueous electrolyte solution | - | - | 100 | 100 |
| Reference Example 1-31 | | Nonaqueous electrolyte solution 1-31 | (1f) | 0.1 | 98.9 | 100.8 |
| Reference Example 1-32 | | Nonaqueous electrolyte solution 1-32 | | 0.5 | 98.4 | 101.2 |
| Reference Example 1-33 | | Nonaqueous electrolyte solution 1-33 | | 1 | 98.0 | 101.7 |
| Reference Example 1-34 | | Nonaqueous electrolyte solution 1-34 | | 2 | 97.8 | 101.9 |
| Reference Example 1-35 | | Nonaqueous electrolyte solution 1-35 | | 3 | 98.2 | 101.6 |
| Reference Example 1-36 | | Nonaqueous electrolyte solution 1-36 | | 5 | 99.1 | 100.8 |

Evaluation:

Also in Table 6, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the

cases where the nonaqueous electrolyte solutions were used in a nonaqueous electrolyte solution battery using graphite as a negative electrode active material.

Examples 2-1 to 2-7:

A nonaqueous electrolyte solution 2-1 of an Example was prepared by dissolving the following compound (2a) as a compound represented by the general formula (2) in Comparative Example 0 (the base nonaqueous electrolyte solution) at the concentration shown in Table 7 below. In the same manner, nonaqueous electrolyte solutions 2-2 to 2-7 of Examples were prepared by changing the concentration of the compound (2a). Furthermore, nonaqueous electrolyte solution batteries were produced and evaluated in the same manner as in the Examples in Table 1.

[Chem. 32]

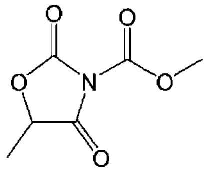

(2a)

Reference Examples 2-1 to 2-7:

Nonaqueous electrolyte solution batteries were produced and evaluated in the same manner as in the Reference Examples in Table 1 except that the same nonaqueous electrolyte solutions as those in Examples 2-1 to 2-7 were used as the nonaqueous electrolyte solutions.

[Table 7]

Table 7

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 2-1 | | Nonaqueous electrolyte solution 2-1 | (2a) | 0.1 | 90.8 | 105.3 |
| Example 2-2 | | Nonaqueous electrolyte solution 2-2 | | 0.5 | 86.2 | 113.4 |
| Example 2-3 | | Nonaqueous electrolyte solution 2-3 | | 1 | 82.4 | 126.7 |
| Example 2-4 | | Nonaqueous electrolyte solution 2-4 | | 2 | 83.1 | 123.4 |
| Example 2-5 | | Nonaqueous electrolyte solution 2-5 | | 3 | 84.8 | 119.8 |
| Example 2-6 | | Nonaqueous electrolyte solution 2-6 | | 5 | 88.1 | 113.1 |
| Example 2-7 | | Nonaqueous electrolyte solution 2-7 | | 10 | 96.7 | 104.5 |
| Comparative Example 0a | Graphite | Base nonaqueous electrolyte solution | - | - | 100 | 100 |
| Reference Example 2-1 | | Nonaqueous electrolyte solution 2-1 | (2a) | 0.1 | 99.2 | 100.7 |
| Reference Example 2-2 | | Nonaqueous electrolyte solution 2-2 | | 0.5 | 98.8 | 101.3 |
| Reference Example 2-3 | | Nonaqueous electrolyte solution 2-3 | | 1 | 98.4 | 102.0 |
| Reference Example 2-4 | | Nonaqueous electrolyte solution 2-4 | | 2 | 97.9 | 101.7 |
| Reference Example 2-5 | | Nonaqueous electrolyte solution 2-5 | | 3 | 98.4 | 101.5 |
| Reference Example 2-6 | | Nonaqueous electrolyte solution 2-6 | | 5 | 98.9 | 100.9 |
| Reference Example 2-7 | | Nonaqueous electrolyte solution 2-7 | | 10 | 99.8 | 100.6 |

Evaluation:

Also in Table 7, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 2-8 to 2-14:

A nonaqueous electrolyte solution 2-8 of an Example was prepared by dissolving the following compound (2b) as a compound represented by the general formula (2) in Comparative Example 0 (the base nonaqueous electrolyte solution) at the concentration shown in Table 8 below. In the same manner, nonaqueous electrolyte solutions 2-9 to 2-14 of Examples were prepared by changing the concentration of the compound (2b). Furthermore, nonaqueous electrolyte solution batteries were produced and evaluated in the same manner as in the Examples in Table 1.

[Chem. 33]

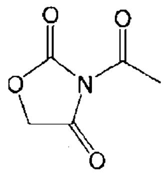

(2b)

Reference Examples 2-8 to 2-14:

Nonaqueous electrolyte solution batteries were produced and evaluated in the same manner as in the Reference Examples in Table 1 except that the same nonaqueous electrolyte solutions as those in Examples 2-8 to 2-14 were used as the nonaqueous electrolyte solutions.

[Table 8]

Table 8

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 2-8 | | Nonaqueous electrolyte solution 2-8 | (2b) | 0.1 | 90.9 | 105.1 |
| Example 2-9 | | Nonaqueous electrolyte solution 2-9 | | 0.5 | 86.7 | 111.4 |
| Example 2-10 | | Nonaqueous electrolyte solution 2-10 | | 1 | 82.7 | 123.1 |
| Example 2-11 | | Nonaqueous electrolyte solution 2-11 | | 2 | 83.4 | 121.1 |
| Example 2-12 | | Nonaqueous electrolyte solution 2-12 | | 3 | 85.2 | 117.5 |
| Example 2-13 | | Nonaqueous electrolyte solution 2-13 | | 5 | 89.0 | 111.3 |
| Example 2-14 | | Nonaqueous electrolyte solution 2-14 | | 10 | 97.8 | 103.7 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0a | Graphite | Base nonaqueous electrolyte solution | - | - | 100 | 100 |
| Reference Example 2-8 | | Nonaqueous electrolyte solution 2-8 | (2b) | 0.1 | 99.3 | 100.8 00.8 |
| Reference Example 2-9 | | Nonaqueous electrolyte solution 2-9 | | 0.5 | 98.9 | 101.4 |
| Reference Example 2-10 | | Nonaqueous electrolyte solution 2-10 | | 1 | 98.6 | 101.9 |
| Reference Example 2-11 | | Nonaqueous electrolyte solution 2-11 | | 2 | 98.2 | 101.5 |
| Reference Example 2-12 | | Nonaqueous electrolyte solution 2-12 | | 3 | 98.4 | 101.2 |
| Reference Example 2-13 | | Nonaqueous electrolyte solution 2-13 | | 5 | 99.1 | 100.8 |
| Reference Example 2-14 | | Nonaqueous electrolyte solution 2-14 | | 10 | 99.7 | 100.3 |

Evaluation:

Also in Table 8, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 2-15 to 2-21:

A nonaqueous electrolyte solution 2-15 of an Example was prepared by dissolving the following compound (2c) as a compound represented by the general formula (2) in Comparative Example 0 (the base nonaqueous electrolyte solution) at the concentration shown in Table 9 below. In the same manner, nonaqueous electrolyte solutions 2-16 to 2-21 of Examples were prepared by changing the concentration of the compound (2c). Furthermore, nonaqueous electrolyte solution batteries were produced and evaluated in the same manner as in the Examples in Table 1.

[Chem. 34]

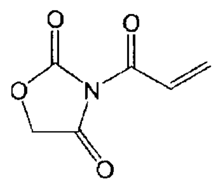

(2c)

Reference Examples 2-15 to 2-20:

Nonaqueous electrolyte solution batteries were produced and evaluated in the same manner as in the Reference Examples in Table 1 except that the same nonaqueous electrolyte solutions as those in Examples 2-15 to 2-20 were used as the nonaqueous electrolyte solutions.

[Table 9]

Table 9

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 1100 | 100 |
| Example 2-15 | | Nonaqueous electrolyte solution 2-15 | (2c) | 0.1 | 91.6 | 106.4 |
| Example 2-16 | | Nonaqueous electrolyte solution 2-16 | | 0.5 | 87.9 | 113.4 |
| Example 2-17 | | Nonaqueous electrolyte solution 2-17 | | 1 | 84.7 | 124.6 |
| Example 2-18 | | Nonaqueous electrolyte solution 2-18 | | 2 | 85.3 | 123.2 |
| Example 2-19 | | Nonaqueous electrolyte solution 2-19 | | 3 | 87.2 | 118.2 |
| Example 2-20 | | Nonaqueous electrolyte solution 2-20 | | 5 | 92.3 | 112.8 |
| Example 2-21 | | Nonaqueous electrolyte solution 2-21 | | 10 | 98.9 | 104.2 |
| Comparative Example 0a | Graphite | Base nonaqueous electrolyte solution | - | - | 100 | 100 |
| Reference Example 2-15 | | Nonaqueous electrolyte solution 2-15 | (2c) | 0.1 | 99.5 | 100.9 |
| Reference Example 2-16 | | Nonaqueous electrolyte solution 2-16 | | 0.5 | 99.2 | 101.5 |
| Reference Example 2-17 | | Nonaqueous electrolyte solution 2-17 | | 1 | 98.8 | 102.0 |
| Reference Example 2-18 | | Nonaqueous electrolyte solution 2-18 | | 2 | 98.4 | 101.8 |
| Reference Example 2-19 | | Nonaqueous electrolyte solution 2-19 | | 3 | 98.6 | 101.4 |
| Reference Example 2-20 | | Nonaqueous electrolyte solution 2-20 | | 5 | 99.3 | 100.9 |

Evaluation:

Also in Table 9, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 2-22 to 2-28:

A nonaqueous electrolyte solution 2-22 of an Example was prepared by dissolving the following compound (2d) as a compound represented by the general formula (2) in Comparative Example 0 (the base nonaqueous electrolyte solution) at the concentration shown in Table 10 below. In the same manner, nonaqueous electrolyte solutions 2-23 to 2-28 of Examples were prepared by changing the concentration of the compound (2d). Furthermore, nonaqueous electrolyte solution batteries were produced and evaluated in the same manner as in the Examples in Table 1.

[Chem. 35]

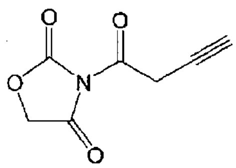

(2d)

Reference Examples 2-21 to 2-26:

Nonaqueous electrolyte solution batteries were produced and evaluated in the same manner as in the Reference Examples in Table 1 except that the same nonaqueous electrolyte solutions as those in Examples 2-22 to 2-27 were used as the nonaqueous electrolyte solutions.

[Table 10]

Table 10

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 2-22 | | Nonaqueous electrolyte solution 2-22 | (2d) | 0.1 | 92.8 | 107.2 |
| Example 2-23 | | Nonaqueous electrolyte solution 2-23 | | 0.5 | 89.7 | 114.6 |
| Example 2-24 | | Nonaqueous electrolyte solution 2-24 | | 1 | 86.8 | 125.2 |
| Example 2-25 | | Nonaqueous electrolyte solution 2-25 | | 2 | 88.2 | 123.4 |
| Example 2-26 | | Nonaqueous electrolyte solution 2-26 | | 3 | 89.8 | 119.4 |
| Example 2-27 | | Nonaqueous electrolyte solution 2-27 | | 5 | 94.2 | 113.2 |
| Example 2-28 | | Nonaqueous electrolyte solution 2-28 | | 10 | 99.7 | 105.4 |
| Comparative Example 0a | Graphite | Base nonaqueous electrolyte solution | - | - | 100 | 100 |
| Reference Example 2-21 | | Nonaqueous electrolyte solution 2-21 | (2d) | 0.1 | 99.7 | 101.2 |
| Reference Example 2-22 | | Nonaqueous electrolyte solution 2-22 | | 0.5 | 99.4 | 101.7 |
| Reference Example 2-23 | | Nonaqueous electrolyte solution 2-23 | | 1 | 98.9 | 102.1 |
| Reference Example 2-24 | | Nonaqueous electrolyte solution 2-24 | | 2 | 98.6 | 101.9 |
| Reference Example 2-25 | | Nonaqueous electrolyte solution 2-25 | | 3 | 98.8 | 101.6 |
| Reference Example 2-26 | | Nonaqueous electrolyte solution 2-26 | | 5 | 99.6 | 101.3 |

Evaluation:

Also in Table 10, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 2-29 to 2-35:

A nonaqueous electrolyte solution 2-29 of an Example was prepared by dissolving the following compound (2e)

as a compound represented by the general formula (2) in Comparative Example 0 (the base nonaqueous electrolyte solution) at the concentration shown in Table 11 below. In the same manner, nonaqueous electrolyte solutions 2-30 to 2-35 of Examples were prepared by changing the concentration of the compound (2e). Furthermore, nonaqueous electrolyte solution batteries were produced and evaluated in the same manner as in the Examples in Table 1.

[Chem. 36]

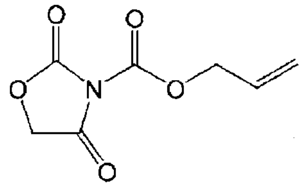

(2e)

Reference Examples 2-27 to 2-32:

Nonaqueous electrolyte solution batteries were produced and evaluated in the same manner as in the Reference Examples in Table 1 except that the same nonaqueous electrolyte solutions as those in Examples 2-29 to 2-34 were used as the nonaqueous electrolyte solutions.

[Table 11]

Table 11

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 2-29 | | Nonaqueous electrolyte solution 2-29 | (2e) | 0.1 | 91.3 | 107.8 |
| Example 2-30 | | Nonaqueous electrolyte solution 2-30 | | 0.5 | 87.2 | 115.2 |
| Example 2-31 | | Nonaqueous electrolyte solution 2-31 | | 1 | 83.2 | 124.9 |
| Example 2-32 | | Nonaqueous electrolyte solution 2-32 | | 2 | 84.7 | 123.5 |
| Example 2-33 | | Nonaqueous electrolyte solution 2-33 | | 3 | 86.3 | 119.2 |
| Example 2-34 | | Nonaqueous electrolyte solution 2-34 | | 5 | 92.0 | 112.9 |
| Example 2-35 | | Nonaqueous electrolyte solution 2-35 | | 10 | 97.6 | 105.3 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0a | Graphite | Base nonaqueous electrolyte solution | - | - | 100 | 100 |
| Reference Example 2-27 | | Nonaqueous electrolyte solution 2-27 | (2e) | 0.1 | 99.2 | 101.1 |
| Reference Example 2-28 | | Nonaqueous electrolyte solution 2-28 | | 0.5 | 99.0 | 101.6 |
| Reference Example 2-29 | | Nonaqueous electrolyte solution 2-29 | | 1 | 98.6 | 102.1 |
| Reference Example 2-30 | | Nonaqueous electrolyte solution 2-30 | | 2 | 98.5 | 101.9 |
| Reference Example 2-31 | | Nonaqueous electrolyte solution 2-31 | | 3 | 98.7 | 101.6 |
| Reference Example 2-32 | | Nonaqueous electrolyte solution 2-32 | | 5 | 99.1 | 101.2 |

Evaluation:

Also in Table 11, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 2-36 to 2-42:

A nonaqueous electrolyte solution 2-36 of an Example was prepared by dissolving the following compound (2f) as a compound represented by the general formula (2) in Comparative Example 0 (the base nonaqueous electrolyte solution) at the concentration shown in Table 12 below. In the same manner, nonaqueous electrolyte solutions 2-37 to 2-42 of Examples were prepared by changing the concentration of the compound (2f). Furthermore, nonaqueous electrolyte solution batteries were produced and evaluated in the same manner as in the Examples in Table 1.

[Chem. 37]

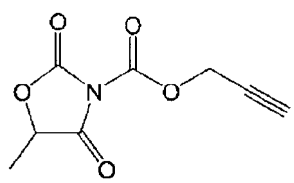

(2f)

Reference Examples 2-33 to 2-38:

Nonaqueous electrolyte solution batteries were produced and evaluated in the same manner as in the Reference Examples in Table 1 except that the same nonaqueous electrolyte solutions as those in Examples 2-36 to 2-41 were used

as the nonaqueous electrolyte solutions.

[Table 12]

Table 12

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 2-36 | | Nonaqueous electrolyte solution 2-36 | (2f) | 0.1 | 92.4 | 108.1 |
| Example 2-37 | | Nonaqueous electrolyte solution 2-37 | | 0.5 | 89.2 | 115.7 |
| Example 2-38 | | Nonaqueous electrolyte solution 2-38 | | 1 | 86.3 | 125.3 |
| Example 2-39 | | Nonaqueous electrolyte solution 2-39 | | 2 | 87.1 | 123.8 |
| Example 2-40 | | Nonaqueous electrolyte solution 2-40 | | 3 | 88.8 | 120.1 |
| Example 2-41 | | Nonaqueous electrolyte solution 2-41 | | 5 | 93.7 | 114.3 |
| Example 2-42 | | Nonaqueous electrolyte solution 2-42 | | 10 | 98.6 | 105.9 |
| Comparative Example 0a | Graphite | Base nonaqueous electrolyte solution | - | - | 100 | 100 |
| Reference Example 2-33 | | Nonaqueous electrolyte solution 2-33 | (2f) | 0.1 | 99.6 | 101.1 |
| Reference Example 2-34 | | Nonaqueous electrolyte solution 2-34 | | 0.5 | 99.5 | 101.6 |
| Reference Example 2-35 | | Nonaqueous electrolyte solution 2-35 | | 1 | 98.8 | 101.9 |
| Reference Example 2-36 | | Nonaqueous electrolyte solution 2-36 | | 2 | 98.7 | 101.8 |
| Reference Example 2-37 | | Nonaqueous electrolyte solution 2-37 | | 3 | 98.8 | 101.5 |
| Reference Example 2-38 | | Nonaqueous electrolyte solution 2-38 | | 5 | 99.5 | 101.3 |

Evaluation:

Also in Table 12, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the

cases where the nonaqueous electrolyte solutions were used in a nonaqueous electrolyte solution battery using graphite as a negative electrode active material.

Examples 3-1 to 3-7:

A nonaqueous electrolyte solution 3-1 of an Example was prepared by dissolving the following compound (3a) as a compound represented by the general formula (3) in Comparative Example 0 (the base nonaqueous electrolyte solution) at the concentration shown in Table 13 below. In the same manner, nonaqueous electrolyte solutions 3-2 to 3-7 of Examples were prepared by changing the concentration of the compound (3a). Furthermore, nonaqueous electrolyte solution batteries were produced and evaluated in the same manner as in the Examples in Table 1.

[Chem. 38]

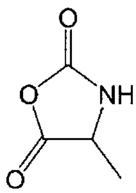

(3a)

Reference Examples 3-1 to 3-6:

Nonaqueous electrolyte solution batteries were produced and evaluated in the same manner as in the Reference Examples in Table 1 except that the same nonaqueous electrolyte solutions as those in Examples 3-1 to 3-6 were used as the nonaqueous electrolyte solutions.

[Table 13]

Table 13

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 3-1 | | Nonaqueous electrolyte solution 3-1 | (3a) | 0.1 | - 95.6 | 103.2 |
| Example 3-2 | | Nonaqueous electrolyte solution 3-2 | | 0.5 | 92.3 | 107.2 |
| Example 3-3 | | Nonaqueous electrolyte solution 3-3 | | 1 | 87.2 | 119.2 |
| Example 3-4 | | Nonaqueous electrolyte solution 3-4 | | 2 | 88.1 | 120.2 |
| Example 3-5 | | Nonaqueous electrolyte solution 3-5 | | 3 | 90.1 | 117.6 |
| Example 3-6 | | Nonaqueous electrolyte solution 3-6 | | 5 | 93.5 | 111.8 |
| Example 3-7 | | Nonaqueous electrolyte solution 3-7 | | 10 | 99.2 | 103.9 |
| Comparative Example 0a | Graphite | Base nonaqueous electrolyte solution | - | - | 100 | 100 |
| Reference Example 3-1 | | Nonaqueous electrolyte solution 3-1 | (3a) | 0.1 | 99.9 | 100.5 |
| Reference Example 3-2 | | Nonaqueous electrolyte solution 3-2 | | 0.5 | 99.4 | 100.9 |
| Reference Example 3-3 | | Nonaqueous electrolyte solution 3-3 | | 1 | 99.2 | 101.1 |
| Reference Example 3-4 | | Nonaqueous electrolyte solution 3-4 | | 2 | 98.7 | 101.4 |
| Reference Example 3-5 | | Nonaqueous electrolyte solution 3-5 | | 3 | 99.1 | 101.3 |
| Reference Example 3-6 | | Nonaqueous electrolyte solution 3-6 | | 5 | 99.6 | 100.7 |

Evaluation:

Also in Table 13, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 3-8 to 3-14:

A nonaqueous electrolyte solution 3-8 of an Example was prepared by dissolving the following compound (3b) as

a compound represented by the general formula (3) in Comparative Example 0 (the base nonaqueous electrolyte solution) at the concentration shown in Table 14 below. In the same manner, nonaqueous electrolyte solutions 3-9 to 3-14 of Examples were prepared by changing the concentration of the compound (3b). Furthermore, nonaqueous electrolyte solution batteries were produced and evaluated in the same manner as in the Examples in Table 1.

[Chem. 39]

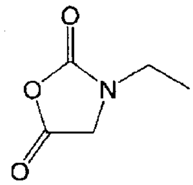

(3 b)

Reference Examples 3-7 to 3-12:

Nonaqueous electrolyte solution batteries were produced and evaluated in the same manner as in the Reference Examples in Table 1 except that the same nonaqueous electrolyte solutions as those in Examples 3-8 to 3-13 were used as the nonaqueous electrolyte solutions.

[Table 14]

Table 14

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 3-8 | | Nonaqueous electrolyte solution 3-8 | (3b) | 0.1 | 94.2 | 104.7 |
| Example 3-9 | | Nonaqueous electrolyte solution 3-9 | | 0.5 | 91.7 | 108.2 |
| Example 3-10 | | Nonaqueous electrolyte solution 3-10 | | 1 | 86.4 | 119.8 |
| Example 3-11 | | Nonaqueous electrolyte solution 3-11 | | 2 | 87.2 | 119.9 |
| Example 3-12 | | Nonaqueous electrolyte solution 3-12 | | 3 | 88.9 | 118.6 |
| Example 3-13 | | Nonaqueous electrolyte solution 3-13 | | 5 | 92.1 | 112.3 |
| Example 3-14 | | Nonaqueous electrolyte solution 3-14 | | 10 | 98.7 | 104.2 |

(continued)

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0a | Graphite | Base nonaqueous electrolyte solution | - | - | 100 | 100 |
| Reference Example 3-7 | | Nonaqueous electrolyte solution 3-7 | (3b) | 0.1 | 99.8 | 100.8 |
| Reference Example 3-8 | | Nonaqueous electrolyte solution 3-8 | | 0.5 | 98.9 | 101.8 |
| Reference Example 3-9 | | Nonaqueous electrolyte solution 3-9 | | 1 | 98.5 | 102.3 |
| Reference Example 3-10 | | Nonaqueous electrolyte solution 3-10 | | 2 | 98.3 | 102.1 |
| Reference Example 3-11 | | Nonaqueous electrolyte solution 3-11 | | 3 | 98.6 | 101.7 |
| Reference Example 3-12 | | Nonaqueous electrolyte solution 3-12 | | 5 | 99.4 | 100.9 |

Evaluation:

Also in Table 14, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

Examples 4-1 to 4-7:

A nonaqueous electrolyte solution 4-1 of an Example was prepared by dissolving the following compound (4a) as a compound represented by the general formula (4) in Comparative Example 0 (the base nonaqueous electrolyte solution) at the concentration shown in Table 15 below. In the same manner, nonaqueous electrolyte solutions 4-2 to 4-7 of Examples were prepared by changing the concentration of the compound (4a). Furthermore, nonaqueous electrolyte solution batteries were produced and evaluated in the same manner as in the Examples in Table 1.

[Chem. 40]

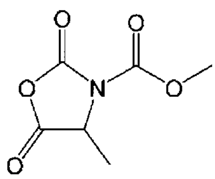

(4 a)

Reference Examples 4-1 to 4-6:

Nonaqueous electrolyte solution batteries were produced and evaluated in the same manner as in the Reference Examples in Table 1 except that the same nonaqueous electrolyte solutions as those in Examples 4-1 to 4-6 were used as

the nonaqueous electrolyte solutions.

[Table 15]

Table 15

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 4-1 | | Nonaqueous electrolyte solution 4-1 | (4a) | 0.1 | 95.3 | 102.8 |
| Example 4-2 | | Nonaqueous electrolyte solution 4-2 | | 0.5 | 92.1 | 106.7 |
| Example 4-3 | | Nonaqueous electrolyte solution 4-3 | | 1 | 87.8 | 118.4 |
| Example 4-4 | | Nonaqueous electrolyte solution 4-4 | | 2 | 88.2 | 118.1 |
| Example 4-5 | | Nonaqueous electrolyte solution 4-5 | | 3 | 90.4 | 116.1 |
| Example 4-6 | | Nonaqueous electrolyte solution 4-6 | | 5 | 94.6 | 111.2 |
| Example 4-7 | | Nonaqueous electrolyte solution 4-7 | | 10 | 98.9 | 104.1 |
| Comparative Example 0a | Graphite | Base nonaqueous electrolyte solution | - | - | 100 | 100 |
| Reference Example 4-1 | | Nonaqueous electrolyte solution 4-1 | (4a) | 0.1 | 99.9 | 100.6 |
| Reference Example 4-2 | | Nonaqueous electrolyte solution 4-2 | | 0.5 | 99.3 | 101.2 |
| Reference Example 4-3 | | Nonaqueous electrolyte solution 4-3 | | 1 | 99.1 | 101.9 |
| Reference Example 4-4 | | Nonaqueous electrolyte solution 4-4 | | 2 | 98.6 | 101.7 |
| Reference Example 4-5 | | Nonaqueous electrolyte solution 4-5 | | 3 | 99.1 | 101.4 |
| Reference Example 4-6 | | Nonaqueous electrolyte solution 4-6 | | 5 | 99.5 | 100.9 |

Evaluation:

Also in Table 15, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the

cases where the nonaqueous electrolyte solutions were used in a nonaqueous electrolyte solution battery using graphite as a negative electrode active material.

Examples 4-8 to 4-14:

A nonaqueous electrolyte solution 4-8 of an Example was prepared by dissolving the following compound (4b) as a compound represented by the general formula (4) in Comparative Example 0 (the base nonaqueous electrolyte solution) at the concentration shown in Table 16 below. In the same manner, nonaqueous electrolyte solutions 4-9 to 4-14 of Examples were prepared by changing the concentration of the compound (4b). Furthermore, nonaqueous electrolyte solution batteries were produced and evaluated in the same manner as in the Examples in Table 1.

[Chem. 41]

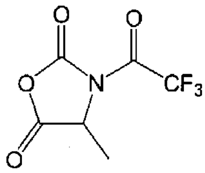

（4 b）

Reference Examples 4-7 to 4-12:

Nonaqueous electrolyte solution batteries were produced and evaluated in the same manner as in the Reference Examples in Table 1 except that the same nonaqueous electrolyte solutions as those in Examples 4-8 to 4-13 were used as the nonaqueous electrolyte solutions.

[Table 16]

Table 16

| | Negative Electrode Active Material | Nonaqueous Electrolyte Solution | Component (I) or Comparative Compound | | Initial Resistance (relative value) | Cycle Discharge Capacity Retention Rate (relative value) |
|---|---|---|---|---|---|---|
| | | | Type | Concentration [% by mass] | | |
| Comparative Example 0 | Si-Graphite | Base nonaqueous electrolyte solution | - | - | 100 | 100 |
| Example 4-8 | | Nonaqueous electrolyte solution 4-8 | (4b) | 0.1 | 95.2 | 104.3 |
| Example 4-9 | | Nonaqueous electrolyte solution 4-9 | | 0.5 | 92.2 | 108.1 |
| Example 4-10 | | Nonaqueous electrolyte solution 4-10 | | 1 | 87.4 | 117.6 |
| Example 4-11 | | Nonaqueous electrolyte solution 4-11 | | 2 | 88.2 | 120.2 |
| Example 4-12 | | Nonaqueous electrolyte solution 4-12 | | 3 | 90.4 | 116.4 |
| Example 4-13 | | Nonaqueous electrolyte solution 4-13 | | 5 | 93.4 | 111.1 |
| Example 4-14 | | Nonaqueous electrolyte solution 4-14 | | 10 | 98.9 | 103.2 |
| Comparative Example 0a | Graphite | Base nonaqueous electrolyte solution | - | - | 100 | 100 |
| Reference Example 4-7 | | Nonaqueous electrolyte solution 4-7 | (4b) | 0.1 | 99.5 | 100.5 |
| Reference Example 4-8 | | Nonaqueous electrolyte solution 4-8 | | 0.5 | 99.2 | 101.2 |
| Reference Example 4-9 | | Nonaqueous electrolyte solution 4-9 | | 1 | 98.9 | 101.5 |
| Reference Example 4-10 | | Nonaqueous electrolyte solution 4-10 | | 2 | 98.7 | 101.6 |
| Reference Example 4-11 | | Nonaqueous electrolyte solution 4-11 | | 3 | 98.8 | 101.3 |
| Reference Example 4-12 | | Nonaqueous electrolyte solution 4-12 | | 5 | 99.3 | 100.7 |

Evaluation:

Also in Table 16, when the Examples of the present disclosure and the Comparative Examples are compared, it is seen that both characteristics of the cycle characteristic and the initial resistance were significantly improved in the cases where the nonaqueous electrolyte solutions according to the present disclosure were used in a nonaqueous electrolyte solution battery using Si and/or a Si metal oxide and graphite as negative electrode active materials as compared with the cases where the nonaqueous electrolyte solutions were used in a nonaqueous electrolyte solution battery using graphite as a negative electrode active material.

<Comparative Example 17-1> (Preparation of Comparative Nonaqueous Electrolyte Solution 17 as Base)

A nonaqueous organic solvent containing other additives was prepared by mixing at a volume ratio of EC: FEC:

DMC: EMC = 3: 0.2: 3: 3.8, and $LiPF_6$ as a solute was dissolved in the solvent in such a manner that the content in the nonaqueous electrolyte solution became 1.00 mol/L. Further, VC and DFOB represented by the following formula as other additives were dissolved at the concentrations shown in Table 17 below to prepare a base nonaqueous electrolyte solution 17. Furthermore, nonaqueous electrolyte solution batteries were produced and evaluated in the same manner as in the Examples in Table 1.

[Chem. 42]

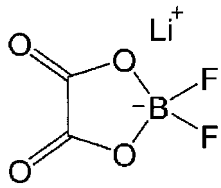

DFOB

Examples 17-1 to 17-16:

Nonaqueous electrolyte solutions 17-1 to 17-16 of Examples were prepared by dissolving various compounds according to the component (I) of the present disclosure in the base nonaqueous electrolyte solution 17 at the concentrations shown in Table 17 below. Furthermore, nonaqueous electrolyte solution batteries were produced and evaluated in the same manner as in the Examples in Table 1.

[Table 17]

Table 17

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 17-1 | | Nonaqueous electrolyte solution 17-1 | (1a) | 1.0 | | | | | 87.9 | 121.2 |
| Example 17-2 | | Nonaqueous electrolyte solution 17-2 | (1b) | 1.0 | | | | | 86.2 | 122.6 |
| Example 17-3 | | Nonaqueous electrolyte solution 17-3 | (1c) | 1.0 | | | | | 86.1 | 121.1 |
| Example 17-4 | | Nonaqueous electrolyte solution 17-4 | (1d) | 1.0 | | | | | 86.9 | 118.8 |
| Example 17-5 | | Nonaqueous electrolyte solution 17-5 | (1e) | 1.0 | | | | | 84.1 | 122.9 |
| Example 17-6 | | Nonaqueous electrolyte solution 17-6 | (1f) | 1.0 | | | | | 81.2 | 120.6 |
| Example 17-7 | | Nonaqueous electrolyte solution 17-7 | (2a) | 1.0 | | | | | 82.5 | 126.6 |
| Example 17-8 | | Nonaqueous electrolyte solution 17-8 | (2b) | 1.0 | | | | | 84.4 | 122.2 |

(continued)

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 17-9 | Si-Graphite | Nonaqueous electrolyte solution 17-9 | (2c) | 1.0 | VC | 1.0 | DFOB | 1.0 | 86.5 | 124.2 |
| Example 17-10 | | Nonaqueous electrolyte solution 17-10 | (2d) | 1.0 | | | | | 88.6 | 123.9 |
| Example 17-11 | | Nonaqueous electrolyte solution 17-11 | (2e) | 1.0 | | | | | 85.0 | 123.8 |
| Example 17-12 | | Nonaqueous electrolyte solution 17-12 | (2f) | 1.0 | | | | | 87.1 | 125.2 |
| Example 17-13 | | Nonaqueous electrolyte solution 17-13 | (3a) | 1.0 | | | | | 89.1 | 119.0 |
| Example 17-14 | | Nonaqueous electrolyte solution 17-14 | (3b) | 1.0 | | | | | 86.5 | 119.4 |
| Example 17-15 | | Nonaqueous electrolyte solution 17-15 | (4a) | 1.0 | | | | | 88.0 | 117.6 |
| Example 17-16 | | Nonaqueous electrolyte solution 17-16 | (4b) | 1.0 | | | | | 88.2 | 116.8 |
| Comparative Example 17-1 | | Base nonaqueous electrolyte solution 17 | - | - | | | | | 100 | 100 |

From the results shown in Table 17, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 17 was used.

<Comparative Example 18-1> (Preparation of Comparative Nonaqueous Electrolyte Solution 18 as Base)

A base nonaqueous electrolyte solution 18 was prepared by the same procedures as those of the base nonaqueous electrolyte solution 17 except that VC and BOB represented by the following formula were dissolved as other additives at the concentrations shown in Table 18 below. Furthermore, nonaqueous electrolyte solution batteries were produced and evaluated in the same manner as in the Examples in Table 1.

[Chem. 43]

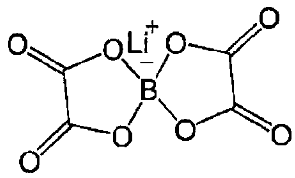

BOB

Examples 18-1 to 18-16:

Nonaqueous electrolyte solutions 18-1 to 18-16 of Examples were prepared by dissolving various compounds according to the component (I) of the present disclosure in the base nonaqueous electrolyte solution 18 at the concentrations shown in Table 18 below. Furthermore, nonaqueous electrolyte solution batteries were produced and evaluated in the same manner as in the Examples in Table 1.

[Table 18]

Table 18

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 18-1 | | Nonaqueous electrolyte solution 18-1 | (1a) | 1.0 | | | | | 86.9 | 120.3 |
| Example 18-2 | | Nonaqueous electrolyte solution 18-2 | (1b) | 1.0 | | | | | 85.3 | 121.9 |
| Example 18-3 | | Nonaqueous electrolyte solution 18-3 | (1c) | 1.0 | | | | | 85.9 | 120.9 |
| Example 18-4 | | Nonaqueous electrolyte solution 18-4 | (1d) | 1.0 | | | | | 86.8 | 118.0 |
| Example 18-5 | | Nonaqueous electrolyte solution 18-5 | (1e) | 1.0 | | | | | 83.1 | 122.1 |
| Example 18-6 | | Nonaqueous electrolyte solution 18-6 | (1f) | 1.0 | | | | | 79.9 | 120.4 |
| Example 18-7 | | Nonaqueous electrolyte solution 18-7 | (2a) | 1.0 | | | | | 82.4 | 125.7 |
| Example 18-8 | | Nonaqueous electrolyte solution 18-8 | (2b) | 1.0 | | | | | 82.9 | 121.2 |

(continued)

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 18-9 | Si-Graphite | Nonaqueous electrolyte solution 18-9 | (2c) | 1.0 | VC | 1.0 | BOB | 1.0 | 85.4 | 123.1 |
| Example 18-10 | | Nonaqueous electrolyte solution 18-10 | (2d) | 1.0 | | | | | 87.9 | 123.6 |
| Example 18-11 | | Nonaqueous electrolyte solution 18-11 | (2e) | 1.0 | | | | | 83.6 | 122.7 |
| Example 18-12 | | Nonaqueous electrolyte solution 18-12 | (2f) | 1.0 | | | | | 86.5 | 125.2 |
| Example 18-13 | | Nonaqueous electrolyte solution 18-13 | (3a) | 1.0 | | | | | 87.8 | 117.8 |
| Example 18-14 | | Nonaqueous electrolyte solution 18-14 | (3b) | 1.0 | | | | | 85.1 | 119.0 |
| Example 18-15 | | Nonaqueous electrolyte solution 18-15 | (4a) | 1.0 | | | | | 86.7 | 117.4 |
| Example 18-16 | | Nonaqueous electrolyte solution 18-16 | (4b) | 1.0 | | | | | 86.7 | 116.1 |
| Comparative Example 18-1 | | Base nonaqueous electrolyte solution 18 | - | - | | | | | 100 | 100 |

From the results shown in Table 18, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 18 was used.

<Comparative Example 19-1> (Preparation of Nonaqueous Electrolyte Solution 19 as Base)

A base nonaqueous electrolyte solution 19 was prepared by the same procedures as those of the base nonaqueous electrolyte solution 17 except that VC and TFOP represented by the following formula were dissolved as other additives at the concentrations shown in Table 19 below. Furthermore, nonaqueous electrolyte solution batteries were produced and evaluated in the same manner as in the Examples in Table 1.

[Chem. 44]

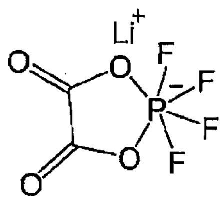

TFOP

Examples 19-1 to 19-16:

Nonaqueous electrolyte solutions 19-1 to 19-16 of Examples were prepared by dissolving various compounds according to the component (I) of the present disclosure in the base nonaqueous electrolyte solution 19 at the concentrations shown in Table 19 below. Furthermore, nonaqueous electrolyte solution batteries were produced and evaluated in the same manner as in the Examples in Table 1.

[Table 19]

Table 19

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 19-1 | | Nonaqueous electrolyte solution 19-1 | (1a) | 1.0 | | | | | 87.4 | 120.7 |
| Example 19-2 | | Nonaqueous electrolyte solution 19-2 | (1b) | 1.0 | | | | | 85.3 | 122.9 |
| Example 19-3 | | Nonaqueous electrolyte solution 19-3 | (1c) | 1.0 | | | | | 86.2 | 121.9 |
| Example 19-4 | | Nonaqueous electrolyte solution 19-4 | (1d) | 1.0 | | | | | 88.0 | 118.1 |
| Example 19-5 | | Nonaqueous electrolyte solution 19-5 | (1e) | 1.0 | | | | | 83.5 | 122.4 |
| Example 19-6 | | Nonaqueous electrolyte solution 19-6 | (1f) | 1.0 | | | | | 80.3 | 121.4 |
| Example 19-7 | | Nonaqueous electrolyte solution 19-7 | (2a) | 1.0 | | | | | 82.5 | 126.5 |
| Example 19-8 | | Nonaqueous electrolyte solution 19-8 | (2b) | 1.0 | | | | | 84.2 | 121.5 |

(continued)

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 19-9 | Si-Graphite | Nonaqueous electrolyte solution 19-9 | (2c) | 1.0 | VC | 1.0 | TFOP | 1.0 | 86.0 | 124.5 |
| Example 19-10 | | Nonaqueous electrolyte solution 19-10 | (2d) | 1.0 | | | | | 88.8 | 125.0 |
| Example 19-11 | | Nonaqueous electrolyte solution 19-11 | (2e) | 1.0 | | | | | 84.5 | 123.2 |
| Example 19-12 | | Nonaqueous electrolyte solution 19-12 | (2f) | 1.0 | | | | | 87.7 | 125.5 |
| Example 19-13 | | Nonaqueous electrolyte solution 19-13 | (3a) | 1.0 | | | | | 89.0 | 118.6 |
| Example 19-14 | | Nonaqueous electrolyte solution 19-14 | (3b) | 1.0 | | | | | 85.7 | 119.3 |
| Example 19-15 | | Nonaqueous electrolyte solution 19-15 | (4a) | 1.0 | | | | | 87.1 | 118.7 |
| Example 19-16 | | Nonaqueous electrolyte solution 19-16 | (4b) | 1.0 | | | | | 87.9 | 117.1 |
| Comparative Example 19-1 | | Base nonaqueous electrolyte solution 19 | - | - | | | | | 100 | 100 |

From the results shown in Table 19, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 19 was used.

<Comparative Example 20-1> (Preparation of Nonaqueous Electrolyte Solution 20 as Base)

A base nonaqueous electrolyte solution 20 was prepared by the same procedures as those of the base nonaqueous electrolyte solution 17 except that VC and DFBOP represented by the following formula were dissolved as other additives at the concentrations shown in Table 20 below. Furthermore, nonaqueous electrolyte solution batteries were produced and evaluated in the same manner as in the Examples in Table 1.

[Chem. 45]

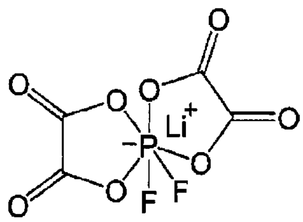

DFBOP

Examples 20-1 to 20-16:

Nonaqueous electrolyte solutions 20-1 to 20-16 of Examples were prepared by dissolving various compounds according to the component (I) of the present disclosure in the base nonaqueous electrolyte solution 20 at the concentrations shown in Table 20 below. Furthermore, nonaqueous electrolyte solution batteries were produced and evaluated in the same manner as in the Examples in Table 1.

[Table 20]

Table 20

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 20-1 | | Nonaqueous electrolyte solution 20-1 | (1a) | 1.0 | | | | | 88.5 | 119.4 |
| Example 20-2 | | Nonaqueous electrolyte solution 20-2 | (1b) | 1.0 | | | | | 85.9 | 121.3 |
| Example 20-3 | | Nonaqueous electrolyte solution 20-3 | (1c) | 1.0 | | | | | 87.0 | 120.3 |
| Example 20-4 | | Nonaqueous electrolyte solution 20-4 | (1d) | 1.0 | | | | | 88.2 | 117.8 |
| Example 20-5 | | Nonaqueous electrolyte solution 20-5 | (1e) | 1.0 | | | | | 84.0 | 122.3 |
| Example 20-6 | | Nonaqueous electrolyte solution 20-6 | (1f) | 1.0 | | | | | 82.2 | 120.9 |
| Example 20-7 | | Nonaqueous electrolyte solution 20-7 | (2a) | 1.0 | | | | | 83.1 | 126.1 |
| Example 20-8 | | Nonaqueous electrolyte solution 20-8 | (2b) | 1.0 | | | | | 85.3 | 120.4 |

(continued)

| | Negative Electrode Active Material | Nonaqueous Electrolyte Solution | Component (I) or Comparative Compound | | Other Additive (I) | | Other Additive (II) | | Initial Resistance (relative value) | Cycle Discharge Capacity Retention Rate (relative value) |
|---|---|---|---|---|---|---|---|---|---|---|
| | | | Type | Concentration [% by mass] | Type | Concentration [% by mass] | Type | Concentration [% by mass] | | |
| Example 20-9 | Si-Graphite | Nonaqueous electrolyte solution 20-9 | (2c) | 1.0 | VC | 1.0 | DFBOP P | 1.0 | 87.7 | 124.2 |
| Example 20-10 | | Nonaqueous electrolyte solution 20-10 | (2d) | 1.0 | | | | | 89.7 | 124.6 |
| Example 20-11 | | Nonaqueous electrolyte solution 20-11 | (2e) | 1.0 | | | | | 86.5 | 122.4 |
| Example 20-12 | | Nonaqueous electrolyte solution 20-12 | (2f) | 1.0 | | | | | 87.8 | 125.5 |
| Example 20-13 | | Nonaqueous electrolyte solution 20-13 | (3a) | 1.0 | | | | | 90.3 | 117.5 |
| Example 20-14 | | Nonaqueous electrolyte solution 20-14 | (3b) | 1.0 | | | | | 86.4 | 119.0 |
| Example 20-15 | | Nonaqueous electrolyte solution 20-15 | (4a) | 1.0 | | | | | 88.5 | 117.5 |
| Example 20-16 | | Nonaqueous electrolyte solution 20-16 | (4b) | 1.0 | | | | | 89.3 | 116.6 |
| Comparative Example 20-1 | | Base nonaqueous electrolyte solution 20 | - | - | | | | | 100 | 100 |

From the results shown in Table 20, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 20 was used.

<Comparative Example 21-1> (Preparation of Nonaqueous Electrolyte Solution 21 as Base)

A base nonaqueous electrolyte solution 21 was prepared by the same procedures as those of the base nonaqueous electrolyte solution 17 except that VC, DFP represented by the following formula, and FS represented by the following formula were dissolved as other additives at the concentrations shown in Table 21 below. Furthermore, nonaqueous electrolyte solution batteries were produced and evaluated in the same manner as in the Examples in Table 1.

[Chem. 46]

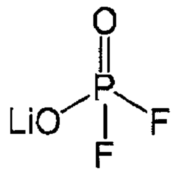

D F P

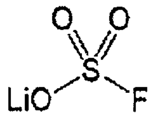

F S

Examples 21-1 to 21-16:

Nonaqueous electrolyte solutions 21-1 to 21-16 of Examples were prepared by dissolving various compounds according to the component (I) of the present disclosure in the base nonaqueous electrolyte solution 21 at the concentrations shown in Table 21 below. Furthermore, nonaqueous electrolyte solution batteries were produced and evaluated in the same manner as in the Examples in Table 1.

[Table 21]

Table 21

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Addition Amount [% by mass] | Type | Addition Amount [% by mass] | Type | Addition Amount [% by mass] | Type | Addition Amount [% by mass] | | |
| Example 21-1 | | Nonaqueous electrolyte solution 21-1 | (1a) | 1.0 | | | | | | | 88.7 | 120.0 |
| Example 21-2 | | Nonaqueous electrolyte solution 21-2 | (1b) | 1.0 | | | | | | | 86.0 | 121.9 |
| Example 21-3 | | Nonaqueous electrolyte solution 21-3 | (1c) | 1.0 | | | | | | | 89.1 | 120.9 |
| Example 21-4 | | Nonaqueous electrolyte solution 21-4 | (1d) | 1.0 | | | | | | | 89.9 | 118.4 |
| Example 21-5 | | Nonaqueous electrolyte solution 21-5 | (1e) | 1.0 | | | | | | | 85.4 | 122.7 |
| Example 21-6 | | Nonaqueous electrolyte solution 21-6 | (1f) | 1.0 | | | | | | | 83.3 | 121.9 |
| Example 21-7 | | Nonaqueous electrolyte solution 21-7 | (2a) | 1.0 | | | | | | | 84.7 | 127.4 |
| Example 21-8 | | Nonaqueous electrolyte solution 21-8 | (2b) | 1.0 | | | | | | | 85.4 | 120.6 |

(continued)

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Addition Amount [% by mass] | Type | Addition Amount [% by mass] | Type | Addition Amount [% by mass] | Type | Addition Amount [% by mass] | | |
| Example 21-9 | Si-Graphite | Nonaqueous electrolyte solution 21-9 | (2c) | 1.0 | DFP | 0.45 | VC | 1.0 | FS | 1.0 | 89.0 | 126.0 |
| Example 21-10 | | Nonaqueous electrolyte solution 21-10 | (2d) | 1.0 | | | | | | | 91.2 | 126.2 |
| Example 21-11 | | Nonaqueous electrolyte solution 21-11 | (2e) | 1.0 | | | | | | | 87.8 | 122.6 |
| Example 21-12 | | Nonaqueous electrolyte solution 21-12 | (2f) | 1.0 | | | | | | | 88.5 | 126.4 |
| Example 21-13 | | Nonaqueous electrolyte solution 21-13 | (3a) | 1.0 | | | | | | | 91.7 | 118.8 |
| Example 21-14 | | Nonaqueous electrolyte solution 21-14 | (3b) | 1.0 | | | | | | | 87.9 | 120.5 |
| Example 21-15 | | Nonaqueous electrolyte solution 21-15 | (4a) | 1.0 | | | | | | | 89.8 | 117.8 |

(continued)

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Addition Amount [% by mass] | Type | Addition Amount [% by mass] | Type | Addition Amount [% by mass] | Type | Addition Amount [% by mass] | | |
| Example 21-16 | | Nonaqueous electrolyte solution 21-16 | (4b) | 1.0 | | | | | | | 89.5 | 117.7 |
| Comparative Example 21-1 | | Base nonaqueous electrolyte solution 21 | - | - | | | | | | | 100 | 100 |

From the results shown in Table 21, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 21 was used.

<Comparative Example 22-1> (Preparation of Nonaqueous Electrolyte Solution 22 as Base)

A base nonaqueous electrolyte solution 22 was prepared by the same procedures as those of the base nonaqueous electrolyte solution 17 except that VC, DFP, and DFPFSI represented by the following formula were dissolved as other additives at the concentrations shown in Table 22 below. Furthermore, nonaqueous electrolyte solution batteries were produced and evaluated in the same manner as in the Examples in Table 1.

[Chem. 47]

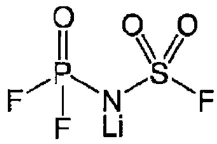

DFPFSI

Examples 22-1 to 22-16:

Nonaqueous electrolyte solutions 22-1 to 22-16 of Examples were prepared by dissolving various compounds according to the component (I) of the present disclosure in the base nonaqueous electrolyte solution 22 at the concentrations shown in Table 22 below. Furthermore, nonaqueous electrolyte solution batteries were produced and evaluated in the same manner as in the Examples in Table 1.

[Table 22]

Table 22

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Addition Amount [% by mass] | Type | Addition Amount [% by mass] | Type | Addition Amount [% by mass] | Type | Addition Amount [% by mass] | | |
| Example 22-1 | | Nonaqueous electrolyte solution 22-1 | (1a) | 1.0 | | | | | | | 89.1 | 120.0 |
| Example 22-2 | | Nonaqueous electrolyte solution 22-2 | (1b) | 1.0 | | | | | | | 87.2 | 123.1 |
| Example 22-3 | | Nonaqueous electrolyte solution 22-3 | (1c) | 1.0 | | | | | | | 90.3 | 121.7 |
| Example 22-4 | | Nonaqueous electrolyte solution 22-4 | (1d) | 1.0 | | | | | | | 90.1 | 118.4 |
| Example 22-5 | | Nonaqueous electrolyte solution 22-5 | (1e) | 1.0 | | | | | | | 86.3 | 122.8 |
| Example 22-6 | | Nonaqueous electrolyte solution 22-6 | (1f) | 1.0 | | | | | | | 83.4 | 121.9 |
| Example 22-7 | | Nonaqueous electrolyte solution 22-7 | (2a) | 1.0 | | | | | | | 85.3 | 128.4 |

(continued)

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Addition Amount [% by mass] | Type | Addition Amount [% by mass] | Type | Addition Amount [% by mass] | Type | Addition Amount [% by mass] | | |
| Example 22-8 | Si-Graphite | Nonaqueous electrolyte solution 22-8 | (2b) | 1.0 | DFP | 0.45 | VC | 1.0 | DFPFSI | 1.0 | 85.9 | 120.7 |
| Example 22-9 | | Nonaqueous electrolyte solution 22-9 | (2c) | 1.0 | | | | | | | 89.5 | 126.4 |
| Example 22-10 | | Nonaqueous electrolyte solution 22-10 | (2d) | 1.0 | | | | | | | 92.4 | 126.9 |
| Example 22-11 | | Nonaqueous electrolyte solution 22-11 | (2e) | 1.0 | | | | | | | 88.3 | 122.8 |
| Example 22-12 | | Nonaqueous electrolyte solution 22-12 | (2f) | 1.0 | | | | | | | 88.5 | 126.5 |
| Example 22-13 | | Nonaqueous electrolyte solution 22-13 | (3a) | 1.0 | | | | | | | 92.1 | 119.6 |

(continued)

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Addition Amount [% by mass] | Type | Addition Amount [% by mass] | Type | Addition Amount [% by mass] | Type | Addition Amount [% by mass] | | |
| Example 22-14 | | Nonaqueous electrolyte solution 22-14 | (3b) | 1.0 | | | | | | | 88.1 | 121.3 |
| Example 22-15 | | Nonaqueous electrolyte solution 22-15 | (4a) | 1.0 | | | | | | | 90.2 | 118.6 |
| Example 22-16 | | Nonaqueous electrolyte solution 22-16 | (4b) | 1.0 | | | | | | | 90.8 | 118.7 |
| Comparative Example 22-1 | | Base nonaqueous electrolyte solution 22 | - | - | | | | | | | 100 | 100 |

From the results shown in Table 22, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 22 was used.

<Comparative Example 23-1> (Preparation of Nonaqueous Electrolyte Solution 23 as Base)

A base nonaqueous electrolyte solution 23 was prepared by dissolving FSI shown below as an additional solute and VC and DTD represented by the following formula as other additives at the concentrations shown in Table 23 below. Furthermore, nonaqueous electrolyte solution batteries were produced and evaluated in the same manner as in the Examples in Table 1.

[Chem. 48]

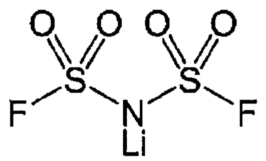

FSI

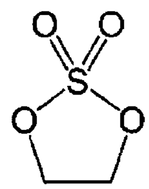

DTD

Examples 23-1 to 23-16:

Nonaqueous electrolyte solutions 23-1 to 23-16 of Examples were prepared by dissolving various compounds according to the component (I) of the present disclosure in the base nonaqueous electrolyte solution 23 at the concentrations shown in Table 23 below. Furthermore, nonaqueous electrolyte solution batteries were produced and evaluated in the same manner as in the Examples in Table 1.

[Table 23]

Table 23

| | Negative Electrode Active Material | Nonaqueous Electrolyte Solution | Component (I) or Comparative Compound | | Additional Solute | | Other Additive (I) | | Other Additive (II) | | Initial Resistance (relative value) | Cycle Discharge Capacity Retention Rate (relative value) |
|---|---|---|---|---|---|---|---|---|---|---|---|---|
| | | | Type | Concent ration [% by mass] | Type | Concent ration [mol/L] | Type | Concent ration [% by mass] | Type | Concent ration [% by mass] | | |
| Example 23-1 | | Nonaqueous electrolyte solution 23-1 | (1a) | 1.0 | | | | | | | 89.4 | 120.5 |
| Example 23-2 | | Nonaqueous electrolyte solution 23-2 | (1b) | 1.0 | | | | | | | 85.0 | 122.6 |
| Example 23-3 | | Nonaqueous electrolyte solution 23-3 | (1c) | 1.0 | | | | | | | 89.2 | 121.0 |
| Example 23-4 | | Nonaqueous electrolyte solution 23-4 | (1d) | 1.0 | | | | | | | 90.4 | 119.1 |
| Example 23-5 | | Nonaqueous electrolyte solution 23-5 | (1e) | 1.0 | | | | | | | 87.0 | 123.7 |
| Example 23-6 | | Nonaqueous electrolyte solution 23-6 | (1f) | 1.0 | | | | | | | 84.0 | 122.9 |
| Example 23-7 | | Nonaqueous electrolyte solution 23-7 | (2a) | 1.0 | | | | | | | 85.5 | 128.7 |
| Example 23-8 | | Nonaqueous electrolyte solution 23-8 | (2b) | 1.0 | | | | | | | 86.7 | 121.4 |

(continued)

| | Negative Electrode Active Material | Nonaqueous Electrolyte Solution | Component (I) or Comparative Compound | | Additional Solute | | Other Additive (I) | | Other Additive (II) | | Initial Resistance (relative value) | Cycle Discharge Capacity Retention Rate (relative value) |
|---|---|---|---|---|---|---|---|---|---|---|---|---|
| | | | Type | Concent ration [% by mass] | Type | Concent ration [mol/L] | Type | Concent ration [% by mass] | Type | Concent ration [% by mass] | | |
| Example 23-9 | Si-Graphite | Nonaqueous electrolyte solution 23-9 | (2c) | 1.0 | FSI | 0.1 | VC | 1.0 | DTD | 1.0 | 89.9 | 127.0 |
| Example 23-10 | | Nonaqueous electrolyte solution 23-10 | (2d) | 1.0 | | | | | | | 92.9 | 127.0 |
| Example 23-11 | | Nonaqueous electrolyte solution 23-11 | (2e) | 1.0 | | | | | | | 89.2 | 123.8 |
| Example 23-12 | | Nonaqueous electrolyte solution 23-12 | (2f) | 1.0 | | | | | | | 89.0 | 127.6 |
| Example 23-13 | | Nonaqueous electrolyte solution 23-13 | (3a) | 1.0 | | | | | | | 92.5 | 120.3 |
| Example 23-14 | | Nonaqueous electrolyte solution 23-14 | (3b) | 1.0 | | | | | | | 89.0 | 121.5 |
| Example 23-15 | | Nonaqueous electrolyte solution 23-15 | (4a) | 1.0 | | | | | | | 91.1 | 120.2 |
| Example 23-16 | | Nonaqueous electrolyte solution 23-16 | (4b) | 1.0 | | | | | | | 90.9 | 120.1 |
| Comparative Example 23-1 | | Base nonaqueous electrolyte solution 23 | - | - | | | | | | | 100 | 100 |

From the results shown in Table 23, it is seen that, even in the case where the nonaqueous electrolyte solutions contained an additional solute and other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 23 was used.

<Comparative Example 24-1> (Preparation of Nonaqueous Electrolyte Solution 24 as Base)

A base nonaqueous electrolyte solution 24 was prepared by dissolving $LiBF_4$ as an additional solute and VC and TDUTO represented by the following formula as other additives at the concentrations shown in Table 24 below. Furthermore, nonaqueous electrolyte solution batteries were produced and evaluated in the same manner as in the Examples in Table 1.

[Chem. 49]

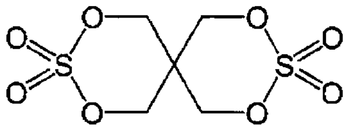

TDUTO

Examples 24-1 to 24-16:

Nonaqueous electrolyte solutions 24-1 to 24-16 of Examples were prepared by dissolving various compounds according to the component (I) of the present disclosure in the base nonaqueous electrolyte solution 24 at the concentrations shown in Table 24 below. Furthermore, nonaqueous electrolyte solution batteries were produced and evaluated in the same manner as in the Examples in Table 1.

[Table 24]

Table 24

| | Negative Electrode Active Material | Nonaqueous Electrolyte Solution | Component (I) or Comparative Compound | | Additional Solute | | Other Additive (I) | | Other Additive (II) | | Initial Resistance (relative value) | Cycle Discharge Capacity Retention Rate (relative value) |
|---|---|---|---|---|---|---|---|---|---|---|---|---|
| | | | Type | Concent ration [% by mass] | Type | Concent ration [mol/L] | Type | Concent ration [% by mass] | Type | Concent ration [% by mass] | | |
| Example 24-1 | | Nonaqueous electrolyte solution 24-1 | (1a) | 1.0 | | | | | | | 88.9 | 121.2 |
| Example 24-2 | | Nonaqueous electrolyte solution 24-2 | (1b) | 1.0 | | | | | | | 84.6 | 123.5 |
| Example 24-3 | | Nonaqueous electrolyte solution 24-3 | (1c) | 1.0 | | | | | | | 87.4 | 121.1 |
| Example 24-4 | | Nonaqueous electrolyte solution 24-4 | (1d) | 1.0 | | | | | | | 89.2 | 119.5 |
| Example 24-5 | | Nonaqueous electrolyte solution 24-5 | (1e) | 1.0 | | | | | | | 86.7 | 124.4 |
| Example 24-6 | | Nonaqueous electrolyte solution 24-6 | (1f) | 1.0 | | | | | | | 83.4 | 123.6 |
| Example 24-7 | | Nonaqueous electrolyte solution 24-7 | (2a) | 1.0 | | | | | | | 84.1 | 128.9 |
| Example 24-8 | | Nonaqueous electrolyte solution 24-8 | (2b) | 1.0 | | | | | | | 85.2 | 122.6 |

(continued)

| | Negative Electrode Active Material | Nonaqueous Electrolyte Solution | Component (I) or Comparative Compound | | Additional Solute | | Other Additive (I) | | Other Additive (II) | | Initial Resistance (relative value) | Cycle Discharge Capacity Retention Rate (relative value) |
|---|---|---|---|---|---|---|---|---|---|---|---|---|
| | | | Type | Concent ration [% by mass] | Type | Concent ration [mol/L] | Type | Concent ration [% by mass] | Type | Concent ration [% by mass] | | |
| Example 24-9 | Si-Graphite | Nonaqueous electrolyte solution 24-9 | (2c) | 1.0 | $LiBF_4$ | 0.02 | VC | 1.0 | TDUTO | 1.0 | 89.9 | 127.6 |
| Example 24-10 | | Nonaqueous electrolyte solution 24-10 | (2d) | 1.0 | | | | | | | 91.3 | 127.1 |
| Example 24-11 | | Nonaqueous electrolyte solution 24-11 | (2e) | 1.0 | | | | | | | 87.9 | 125.1 |
| Example 24-12 | | Nonaqueous electrolyte solution 24-12 | (2f) | 1.0 | | | | | | | 88.2 | 128.7 |
| Example 24-13 | | Nonaqueous electrolyte solution 24-13 | (3a) | 1.0 | | | | | | | 91.8 | 121.3 |
| Example 24-14 | | Nonaqueous electrolyte solution 24-14 | (3b) | 1.0 | | | | | | | 88.4 | 122.1 |
| Example 24-15 | | Nonaqueous electrolyte solution 24-15 | (4a) | 1.0 | | | | | | | 89.6 | 121.5 |
| Example 24-16 | | Nonaqueous electrolyte solution 24-16 | (4b) | 1.0 | | | | | | | 89.2 | 120.1 |
| Comparative Example 24-1 | | Base nonaqueous electrolyte solution 24 | - | - | | | | | | | 100 | 100 |

From the results shown in Table 24, it is seen that, even in the case where the nonaqueous electrolyte solutions contained an additional solute and other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 24 was used.

<Comparative Example 25-1> (Preparation of Nonaqueous Electrolyte Solution 25 as Base)

A base nonaqueous electrolyte solution 25 was prepared by dissolving VC, DFP, and diglycolic anhydride (DGA) represented by the following formula as other additives at the concentrations shown in Table 25 below. Furthermore, nonaqueous electrolyte solution batteries were produced and evaluated in the same manner as in the Examples in Table 1.

[Chem. 50]

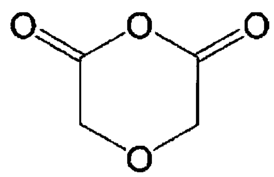

DGA

Examples 25-1 to 25-16:

Nonaqueous electrolyte solutions 25-1 to 25-16 of Examples were prepared by dissolving various compounds according to the component (I) of the present disclosure in the base nonaqueous electrolyte solution 25 at the concentrations shown in Table 25 below. Furthermore, nonaqueous electrolyte solution batteries were produced and evaluated in the same manner as in the Examples in Table 1.

[Table 25]

Table 25

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Concentration [% by mass] | Type | Concentration [% by mass] | Type | Concentration [% by mass] | Type | Concentration [% by mass] | | |
| Example 25-1 | | Nonaqueous electrolyte solution 25-1 | (1a) | 1.0 | | | | | | | 87.1 | 118.2 |
| Example 25-2 | | Nonaqueous electrolyte solution 25-2 | (1b) | 1.0 | | | | | | | 83.5 | 120.8 |
| Example 25-3 | | Nonaqueous electrolyte solution 25-3 | (1c) | 1.0 | | | | | | | 87.7 | 119.6 |
| Example 25-4 | | Nonaqueous electrolyte solution 25-4 | (1d) | 1.0 | | | | | | | 89.6 | 115.6 |
| Example 25-5 | | Nonaqueous electrolyte solution 25-5 | (1e) | 1.0 | | | | | | | 84.8 | 121.5 |
| Example 25-6 | | Nonaqueous electrolyte solution 25-6 | (1f) | 1.0 | | | | | | | 82.7 | 120.0 |
| Example 25-7 | | Nonaqueous electrolyte solution 25-7 | (2a) | 1.0 | | | | | | | 81.8 | 126.7 |
| Example 25-8 | | Nonaqueous electrolyte solution 25-8 | (2b) | 1.0 | | | | | | | 84.1 | 118.0 |

(continued)

| | Negative Electrode Active Material | Nonaqueous Electrolyte Solution | Component (I) or Comparative Compound | | Other Additive (I) | | Other Additive (II) | | Other Additive (III) | | Initial Resistance (relative value) | Cycle Discharge Capacity Retention Rate (relative value) |
|---|---|---|---|---|---|---|---|---|---|---|---|---|
| | | | Type | Concent ration [% by mass] | Type | Concent ration [% by mass] | Type | Concent ration [% by mass] | Type | Concent ration [% by mass] | | |
| Example 25-9 | Si-Graphite | Nonaqueous electrolyte solution 25-9 | (2c) | 1.0 | DFP | 0.45 | VC | 1.0 | DGA | 0.2 | 86.7 | 124.1 |
| Example 25-10 | | Nonaqueous electrolyte solution 25-10 | (2d) | 1.0 | | | | | | | 90.5 | 125.1 |
| Example 25-11 | | Nonaqueous electrolyte solution 25-11 | (2e) | 1.0 | | | | | | | 86.4 | 119.6 |
| Example 25-12 | | Nonaqueous electrolyte solution 25-12 | (2f) | 1.0 | | | | | | | 85.8 | 125.5 |
| Example 25-13 | | Nonaqueous electrolyte solution 25-13 | (3a) | 1.0 | | | | | | | 91.3 | 118.0 |
| Example 25-14 | | Nonaqueous electrolyte solution 25-14 | (3b) | 1.0 | | | | | | | 85.6 | 119.9 |
| Example 25-15 | | Nonaqueous electrolyte solution 25-15 | (4a) | 1.0 | | | | | | | 87.4 | 116.1 |
| Example 25-16 | | Nonaqueous electrolyte solution 25-16 | (4b) | 1.0 | | | | | | | 87.3 | 117.3 |
| Comparative Example 25-1 | | Base nonaqueous electrolyte solution 25 | - | - | | | | | | | 100 | 100 |

From the results shown in Table 25, it is seen that, even in the case where the nonaqueous electrolyte solutions contained other additives, when the nonaqueous electrolyte solutions according to the Examples containing the various compounds according to the component (I) of the present disclosure were used, both characteristics of the cycle characteristic and the initial resistance were significantly improved in a nonaqueous electrolyte solution battery using Si-graphite as a negative electrode active material as compared with the case where the base nonaqueous electrolyte solution 25 was used.

## Claims

1. A nonaqueous electrolyte solution for use in a nonaqueous electrolyte solution battery comprising a positive electrode and a negative electrode containing Si and/or a Si metal oxide and graphite as negative electrode active materials,

comprising the following components:

(I) at least one selected from the group consisting of a compound represented by the following general formula (1), a compound represented by the following general formula (2), a compound represented by the following general formula (3), and a compound represented by the following general formula (4);
(II) a solute; and
(III) a nonaqueous organic solvent.

[Chem. 1]

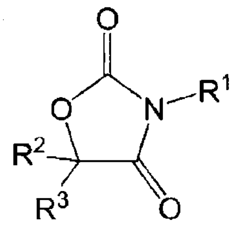

(1)

[wherein in the general formula (1),
$R^1$ represents a hydrogen atom, a halogen atom, a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have an ether group between any carbon-carbon atoms thereof), or $(M_A{}^{a+})_b$ ($M_A{}^{a+}$ represents a cation selected from the group consisting of a proton, a metal cation, and an onium cation, a represents the valence of the cation, and b represents a number satisfying a × b = 1), wherein when $R^1$ is $(M_{Aa}{}^{+})_b$, the site other than $R^1$ is a counter anion, and
$R^2$ and $R^3$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, and the hydrocarbon group may have a heteroatom, a carbonyl group, an ester group, or an ether group between any carbon-carbon atoms thereof), wherein $R^2$ and $R^3$ may together form a carbonyl group]

[Chem. 2]

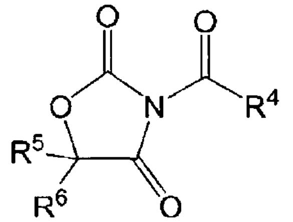

(2)

[wherein in the general formula (2),
$R^4$ represents a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof), and
$R^5$ and $R^6$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, an alkoxycarbonyl group having 1 to 5 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, or the hydrocarbon group may have a heteroatom, a carbonyl group, an ester group, or an ether group between any carbon-carbon atoms), wherein $R^5$ and $R^6$ may together form a carbonyl group]

[Chem. 3]

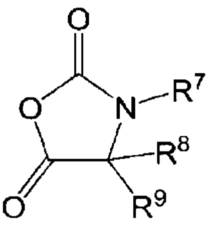

(3)

[wherein in the general formula (3),
$R^7$ represents a hydrogen atom, a halogen atom, a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have an ether group between any carbon-carbon atoms thereof), or $(M_C^{e+})_f$ ($M_C^{e+}$ represents a cation selected from the group consisting of a proton, a metal cation, and an onium cation, e represents the valence of the cation, and f represents a number satisfying $e \times f = 1$), wherein when $R^7$ is $(M_C^{e+})_f$, the site other than $R^7$ is a counter anion, and
$R^8$ and $R^9$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an

aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, and the hydrocarbon group may have a heteroatom, a carbonyl group, an ester group, or an ether group between any carbon-carbon atoms thereof), wherein $R^8$ and $R^9$ may together form a carbonyl group]

[Chem. 4]

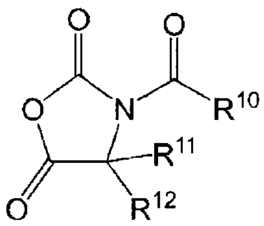

(4)

[wherein in the general formula (4),

$R^{10}$ represents a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof), and $R^{11}$ and $R^{12}$ each independently represent a hydrogen atom, a halogen atom, or a hydrocarbon group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, an alkoxycarbonyl group having 1 to 5 carbon atoms, a cycloalkyl group having 3 to 8 carbon atoms, a cycloalkoxy group having 3 to 8 carbon atoms, an aryl group having 6 to 10 carbon atoms, an aryloxy group having 6 to 10 carbon atoms, a heteroaryl group having 6 to 10 carbon atoms, and a heteroaryloxy group having 6 to 10 carbon atoms (a part or all of the hydrogen atoms of the hydrocarbon group may be each independently substituted with a halogen atom, a cyano group, or an isocyano group, and the hydrocarbon group may have a heteroatom, a carbonyl group, an ester group, or an ether group between any carbon-carbon atoms thereof), wherein $R^{11}$ and $R^{12}$ may together form a carbonyl group.]

**2.** The nonaqueous electrolyte solution according to claim 1, wherein the concentration of the (I) is 0.01 to 11 mass with respect to the total amount of the nonaqueous electrolyte solution.

**3.** The nonaqueous electrolyte solution according to claim 2, wherein the concentration of the (I) is 0.08 to 10.5% by mass with respect to the total amount of the nonaqueous electrolyte solution.

**4.** The nonaqueous electrolyte solution according to claim 3, wherein the concentration of the (I) is 0.20 to 9% by mass with respect to the total amount of the nonaqueous electrolyte solution.

**5.** The nonaqueous electrolyte solution according to claim 1, wherein the (I) is at least one selected from the group consisting of the compound represented by the general formula (1) and the compound represented by the general formula (2).

**6.** The nonaqueous electrolyte solution according to claim 1, wherein the (II) is at least one selected from the group consisting of $LiPF_6$, $LiBF_4$, $LiSbF_6$, $LiAsF_6$, $LiClO_4$, $LiN(SO_2F)_2$, $LiAlO_2$, $LiAlCl_4$, LiCl, and LiI.

**7.** The nonaqueous electrolyte solution according to claim 1, wherein the (III) contains at least one selected from the group consisting of a cyclic ester, a chain ester, a cyclic ether, a chain ether, a sulfone compound, a sulfoxide compound, and an ionic liquid.

**8.** The nonaqueous electrolyte solution according to claim 7, wherein the cyclic ester contains a cyclic carbonate.

**9.** The nonaqueous electrolyte solution according to claim 8, wherein the cyclic carbonate contains at least one selected from the group consisting of ethylene carbonate and propylene carbonate.

**10.** The nonaqueous electrolyte solution according to claim 7, wherein the chain ester contains a chain carbonate.

**11.** The nonaqueous electrolyte solution according to claim 10, wherein the chain carbonate contains at least one selected from the group consisting of ethyl methyl carbonate, dimethyl carbonate, diethyl carbonate, and methyl propyl carbonate.

**12.** The nonaqueous electrolyte solution according to claim 1, wherein the nonaqueous electrolyte solution further comprises at least one selected from the group consisting of cyclohexylbenzene, cyclohexylfluorobenzene, biphenyl, 2-fluorobiphenyl, t-butylbenzene, t-amylbenzene, 2-fluorotoluene, fluorobenzene, vinylene carbonate, an oligomer of vinylene carbonate (having a number average molecular weight in terms of polystyrene of 170 to 5000), vinylethylene carbonate, difluoroanisole, fluoroethylene carbonate, 1,6-diisocyanatohexane, ethynylethylene carbonate, trans-difluoroethylene carbonate, methyl propargyl carbonate, ethyl propargyl carbonate, dipropargyl carbonate, maleic anhydride, succinic anhydride, 1,3-propanesultone, 1,3-propenesultone, 1,4-butanesultone, dimethylvinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, tris(trimethylsilyl)borate, succinonitrile, (ethoxy)pentafluorocyclotriphosphazene, tetrafluoro(picolinato)phosphate, difluoro(picolinato)borate, 1,3-dimethyl-1,3-divinyl-1,3-di(1,1,1,3,3,3-hexafluoroisopropyl)disiloxane, lithium difluorophosphate, sodium difluorophosphate, lithium fluorosulfate, sodium fluorosulfate, lithium trifluoromethanesulfonate, sodium trifluoromethanesulfonate, lithium nonafluorobutanesulfonate, sodium nonafluorobutanesulfonate, lithium difluorobis(oxalato)phosphate, sodium difluorobis(oxalato)phosphate, lithium difluorooxalatoborate, sodium difluorooxalatoborate, lithium bis(oxalato)borate, sodium bis(oxalato)borate, lithium tetrafluorooxalatophosphate, sodium tetrafluorooxalatophosphate, lithium tris(oxalato)phosphate, sodium tris(oxalato)phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide, sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl)imide, lithium tris(trifluoromethanesulfonyl)methide, sodium tris(trifluoromethanesulfonyl)methide, lithium acrylate, sodium acrylate, lithium methacrylate, sodium methacrylate, lithium methyl sulfate, sodium methyl sulfate, lithium ethyl sulfate, sodium ethyl sulfate, lithium nitrate, lithium nitrite, sodium nitrate, and sodium nitrite.

**13.** The nonaqueous electrolyte solution according to claim 1, further comprising a compound represented by the following general formula (5):

[Chem. 5]

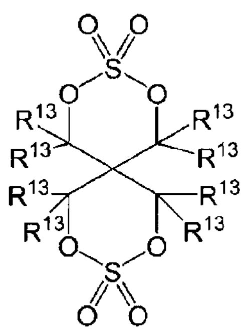

(5)

[wherein in the general formula (5), $R^{13}$'s each independently represent a hydrogen atom, a halogen atom, or an alkyl

group having 1 to 12 carbon atoms, an oxygen atom may be inserted between any carbon atom-carbon atom bond in the alkyl group, and any hydrogen atom of the alkyl group may be substituted with a fluorine atom.]

**14.** The nonaqueous electrolyte solution according to claim 13, wherein the compound represented by the general formula (5) is at least one selected from the group consisting of the following compounds.

[Chem. 6]

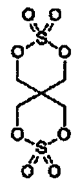
Compound 1-1

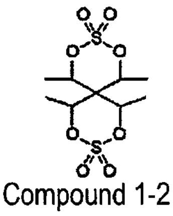
Compound 1-2

**15.** The nonaqueous electrolyte solution according to claim 1, further comprising a compound represented by the following general formula (6):

[Chem. 7]

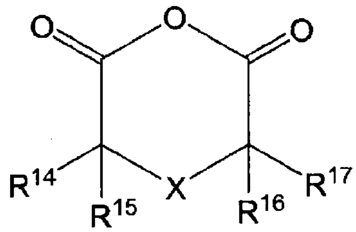
(6)

[wherein in the general formula (6), $R^{14}$ to $R^{17}$ each independently represents a hydrogen atom, a halogen atom, an alkyl group, an alkenyl group, or an aryl group, and X represents an oxygen atom, a sulfur atom, or an $SO_2$ group.]

**16.** The nonaqueous electrolyte solution according to claim 15, wherein the compound of the formula (6) is a compound represented by the following formula.

[Chem. 8]

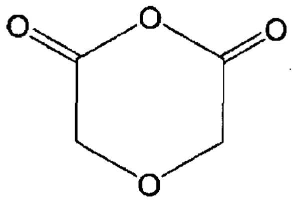

**17.** The nonaqueous electrolyte solution according to claim 1, wherein the total content of the Si and/or the Si metal oxide with respect to the total amount of the Si and/or the Si metal oxide and the graphite is 0.1 to 50% by mass.

**18.** A nonaqueous electrolyte solution battery comprising a positive electrode, a negative electrode containing Si and/or a Si metal oxide and graphite as negative electrode active materials, and the nonaqueous electrolyte solution according to any one of claims 1 to 17.

## INTERNATIONAL SEARCH REPORT

International application No.
**PCT/JP2024/034774**

**A. CLASSIFICATION OF SUBJECT MATTER**

***H01M 10/0567***(2010.01)i; ***H01M 4/36***(2006.01)i; ***H01M 4/38***(2006.01)i; ***H01M 4/48***(2010.01)i; ***H01M 4/587***(2010.01)i; ***H01M 10/052***(2010.01)i; ***H01M 10/0568***(2010.01)i; ***H01M 10/0569***(2010.01)i
FI: H01M10/0567; H01M4/36 E; H01M4/38 Z; H01M4/48; H01M4/587; H01M10/052; H01M10/0568; H01M10/0569

According to International Patent Classification (IPC) or to both national classification and IPC

**B. FIELDS SEARCHED**

Minimum documentation searched (classification system followed by classification symbols)

H01M10/0567; H01M4/36; H01M4/38; H01M4/48; H01M4/587; H01M10/052; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br><br><br>Y | SCHMIEGEL et al., Case study of N-carboxyanhydrides in silicon-based lithium ion cells as a guideline for systematic electrolyte additive research, Cell Reports Physical Science, 24 February 2021, vol. 2, 100327, pp. 1-26, https://doi.org/10.1016/j.xcrp.2021.100327<br>pp. 1-26<br>pp. 1-26 | 1-4, 6-12, 17-18<br><br><br><br>5, 13-16 |
| Y | JP 2012-113826 A (SHARP KABUSHIKI KAISHA) 14 June 2012 (2012-06-14)<br>claims, examples | 5, 13-16 |
| Y | JP 2023-503203 A (NINGDE AMPEREX TECHNOLOGY LIMITED) 27 January 2023 (2023-01-27)<br>claims, examples | 5, 13-16 |
| Y | JP 2003-151623 A (JAPAN STORAGE BATTERY CO., LTD.) 23 May 2003 (2003-05-23)<br>claims | 5, 13-16 |
| A | WO 2015/045989 A1 (MITSUI CHEMICALS, INC.) 02 April 2015 (2015-04-02) | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

INTERNATIONAL SEARCH REPORT

International application No.
PCT/JP2024/034774

C. DOCUMENTS CONSIDERED TO BE RELEVANT

| Category* | Citation of document, with indication, where appropriate, of the relevant passages | Relevant to claim No. |
|---|---|---|
| A | JP 2002-270229 A (SONY CORPORATION) 20 September 2002 (2002-09-20) | 1-18 |

Form PCT/ISA/210 (second sheet) (July 2022)

**INTERNATIONAL SEARCH REPORT**
**Information on patent family members**

International application No.
**PCT/JP2024/034774**

| Patent document cited in search report | Publication date (day/month/year) | Patent family member(s) | Publication date (day/month/year) |
|---|---|---|---|
| JP 2012-113826 A | 14 June 2012 | US 2012/0129046 A1<br>claims, examples<br>CN 102569884 A | |
| JP 2023-503203 A | 27 January 2023 | US 2022/0123357 A1<br>claims, examples<br>WO 2022/077926 A1<br>EP 4010937 A1<br>CN 112151749 A<br>KR 10-2021-0112389 A | |
| JP 2003-151623 A | 23 May 2003 | US 2003/0054259 A1<br>claims<br>EP 1276165 A1<br>CN 1398013 A | |
| WO 2015/045989 A1 | 02 April 2015 | US 2016/0211551 A1<br>EP 3051619 A1<br>CN 105474452 A<br>KR 10-2016-0032215 A | |
| JP 2002-270229 A | 20 September 2002 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5109213 B
- JP 4302366 B
- JP 5439345 B
- JP 2011233245 A
- JP 2009137834 A
- US 7135252 B
- JP 2008270201 A
- WO 2013118661 A
- JP 2013030284 A

### Non-patent literature cited in the description

- *Cell Reports Physical Science*, 2021, vol. 2, 100327
- *Journal of Pharmacy Research*, October 2011, vol. 4 (10)
- *Can. J. Chem.*, 2001, vol. 79, 1040-1048